(19) Europäisches Patentamt
European Patent Office
Office européen des brevets

(11) **EP 4 203 692 B1**

(12) **EUROPÄISCHE PATENTSCHRIFT**

(45) Veröffentlichungstag und Bekanntmachung des Hinweises auf die Patenterteilung:
**24.09.2025   Patentblatt 2025/39**

(21) Anmeldenummer: **21805373.4**

(22) Anmeldetag: **15.10.2021**

(51) Internationale Patentklassifikation (IPC):
*A23C 9/142* (2006.01)    *A23C 9/144* (2006.01)
*A23C 19/028* (2006.01)    *A23C 19/064* (2006.01)
*C02F 1/469* (2023.01)

(52) Gemeinsame Patentklassifikation (CPC):
**C02F 1/444; A23C 9/1425; A23C 9/144;
A23C 19/064; C02F 1/4693;** C02F 2103/327

(86) Internationale Anmeldenummer:
**PCT/EP2021/000125**

(87) Internationale Veröffentlichungsnummer:
**WO 2022/096143 (12.05.2022 Gazette 2022/19)**

(54) **VERFAHREN UND ANLAGE ZUR BEHANDLUNG VON SALZLAKE IN SALZBÄDERN FÜR DAS SALZEN VON KÄSE**

METHOD AND FACILITY FOR THE TREATMENT OF BRINE IN SALT BATHS FOR SALTING CHEESE

PROCÉDÉ ET INSTALLATION POUR LE TRAITEMENT DE SAUMURE DANS DES BAINS DE SEL POUR LE SALAGE DE FROMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **06.11.2020   DE 102020006813**

(43) Veröffentlichungstag der Anmeldung:
**05.07.2023   Patentblatt 2023/27**

(73) Patentinhaber: **GEA TDS GmbH
31157 Sarstedt (DE)**

(72) Erfinder: **FEUERRIEGEL, Bernd
13505 Berlin (DE)**

(74) Vertreter: **Hauck Patent- und Rechtsanwälte PartmbB
Postfach 11 31 53
20431 Hamburg (DE)**

(56) Entgegenhaltungen:
**EP-A1- 2 745 704      NO-B1- 316 301
US-A- 4 205 090      US-A1- 2009 142 459**

**Beschreibung**

TECHNISCHES GEBIET

Die Erfindung betrifft ein Verfahren zur Behandlung von Salzlake in Salzbädern für ein Salzen von Käse nach dem Oberbegriff des Anspruchs 1. Darüber hinaus betrifft die Erfindung eine Anlage nach dem Oberbegriff des Nebenanspruchs 7, die geeignet ist, das erfindungsgemäße Verfahren durchzuführen.

STAND DER TECHNIK

In der einschlägigen Fachliteratur finden sich zum Aussalzen der Käse [1] bzw. zum Salzen der Käse [2] ausschnittsweise die nachfolgend zitierten Hinweise.

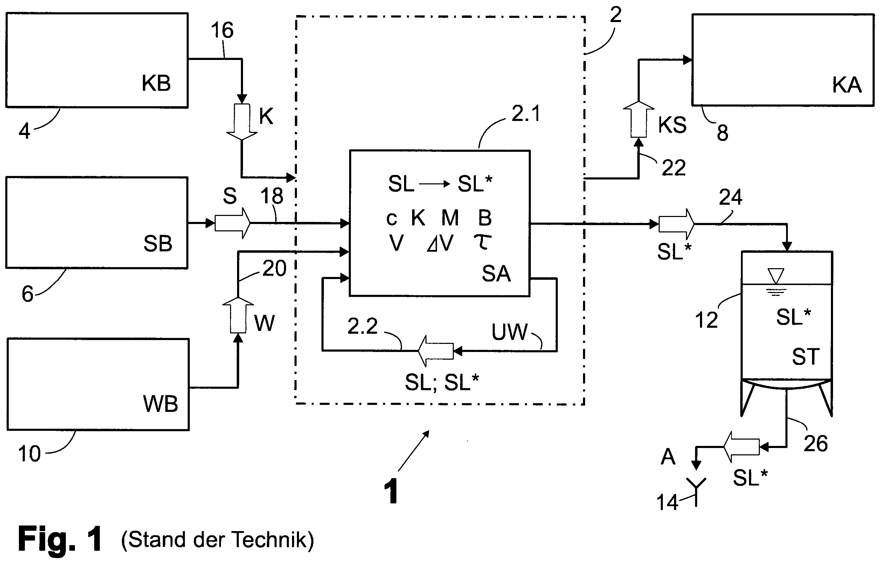

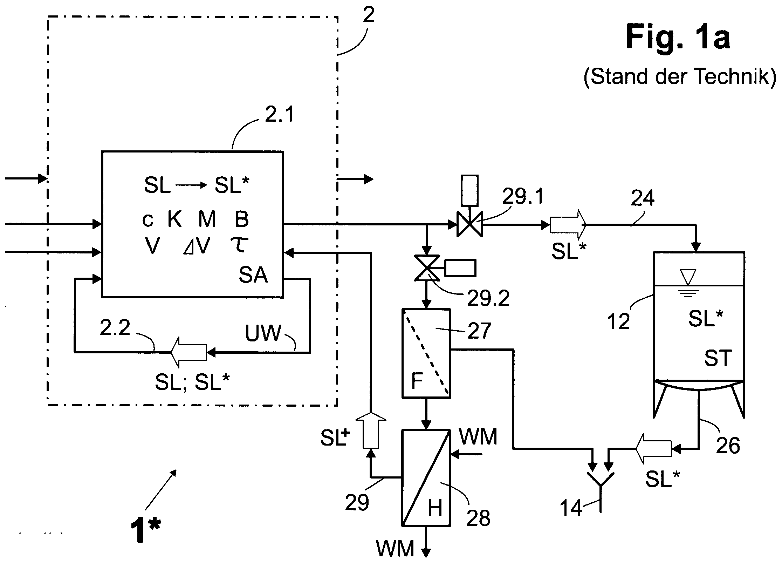

[1]: G. Roeder, Grundzüge der Milchwirtschaft und des Molkereiwesens, 1954, Verlag Paul Parey, Hamburg und Berlin (Zitat): Das richtige Salzen des Käses ist von großer Wichtigkeit für die Güte des fertigen Produkts. Es bezweckt neben der geschmacklichen Beeinflussung einen weiteren Entzug von Molke und wirkt in verschiedener Weise auf die Bildung der Rinde bzw. auf der Oberfläche des Käses, auf die Entwicklung der Reifungsbakterien und auf die Haltbarkeit des Käses. Man unterscheidet das Trockensalzen, die Behandlung im Salzbad, das Salzen im Bruch.
[2]: H. G. Kessler, Lebensmittel- und Bioverfahrenstechnik, Molkereitechnologie, 1996, Verlag A. Kessler, München (Zitat): Das Salzbad mit 16 bis 25 % NaCl-Konzentration wird heute am meisten angewendet. Für Hartkäse und Schnittkäse verwendet man NaCl-Konzentrationen von 19 bis 23 %, für Weichkäse von 16 bis 18 %. Die Verweilzeit im Salzbad beträgt durchschnittlich 3 bis 5 Tage für Emmentaler bei 12 bis 16 °C und bis 1 bis 2 Std. für Camembert bei 16 bis 20 °C. Eine höhere Temperatur fördert zwar die Diffusionsgeschwindigkeit des Salzes im Käse, sie führt aber auch noch zu Molkenaustritt und damit zu Masseverlust. Wird das Salzbad im Laufe der Zeit durch Milchsäure-übertritt zu sauer, so muss Wasser mit entsprechendem NaCl-Gehalt zugesetzt werden, oder es wird mit Kalk ($Ca(OH)_2$) abgestumpft. Der pH-Wert soll etwa 5,2 betragen. Der Salzgehalt im Bad muss kontrolliert werden. Er ist regelmäßig zu ergänzen. Von Zeit zu Zeit sollte das Salzbad, in das Eiweiß, Milchzucker, Milchsäure, sonstige Rückstände und Staub gelangen, erneuert, zumindest gefiltert und aufgekocht werden (siehe hierzu **Figur 1a** der Zeichnung). Es können sich Infektionen mit halophilen Mikroorganismen einstellen. Ein regeneriertes Salzbad muss durch Milchsäurezugabe wieder auf den erforderlichen pH-Wert eingestellt werden. Die Käse erreichen im Durchschnitt Salzgehalte, die zwischen 0,5 und 4 % liegen.

Die vorstehend in **[1]** und **[2]** sehr allgemein gehaltenen technologischen Hinweise zum Salzen der Käse werden nachfolgend mit Blick auf die vorliegende Erfindung noch eingehender thematisiert. Bei der industriellen großtechnischen Herstellung von Käse wird heute kontinuierlich Salz zum Salzbad zudosiert bei gleichzeitigem Überlauf des Salzbades durch die hinzukommende Molke und andere aus dem Käse übertretende Bestandteile. Der Überlauf wird zum Auswaschen der Schmutzfracht im Salzbad genutzt, wobei die verunreinigte Salzlake abgeführt und ggf. verworfen und aufgrund einer Konzentration von ca. 20 % NaCl wegen der damit verbundenen hohen Chlorid-Belastung zu einem Entsorgungs- bzw. Aufbereitungsproblem wird.

Eine anmelderseits bekannte erste Anlage, die nicht druckschriftlich zu belegen ist, zeigt **Figur 1** der Zeichnung. Der ungesalzene Käse wird bei der industriellen großtechnischen Herstellung oftmals kontinuierlich, aber auch diskontinuierlich und chargenweise, mit einem Eingangs-Salzgehalt in ein Salzbad mit einem vorgegebenem Volumen an Salzlake eingebracht und verlässt es als gesalzener Käse mit einem Salzgehalt im Bereich der vorstehenden Angaben. Die Salzlake im Salzbad enthält, abhängig von der Käsesorte und wie vorstehend angegeben, beispielsweise 20 % NaCl (entsprechend 0,2 kg/kg oder 200 g/l). Die Käserinde nimmt Salzlake auf, wodurch sie quillt und die Käsematrix der Käserinde einen Stoffaustausch befördert. Mit fortschreitender Verweilzeit des Käses im Salzbad tritt Molke durch den osmotischen Druck in die Salzlake über, während Salz aus der Salzlake in das Käseinnere diffundiert, wodurch der Käse eine bestimmte Salzmenge aufnimmt. Diese vom Käse aufgenommene Salzmenge wird der Salzlake des Salzbades entzogen. Zusätzlich verdünnt die austretende Molke die Salzkonzentration der Salzlake, weshalb letzterer zum Aufrechterhalten der technologisch erforderlichen Salz-konzentration kontinuierlich Salz hinzugefügt werden muss.

Die austretende Molke enthält weitere gelöste und/oder dispergierte Käse-Inhaltsstoffe, nachfolgend auch als Bestandteile bezeichnet, wie unter anderem Proteine, Mineralien, Mikroorganismen, Fette, die ins Salzbad übergehen und es verunreinigen. Das aus der Käsereimilch stammende und nach der Käseherstellung teils in der Molke enthaltene Calcium geht als dissoziierte $Ca^{2+}$-Ionen mit der Molke ins Salzbad über. Durch diesen Verlust an Calcium und die dadurch begünstigte Aufnahme von Natrium würde die Käserinde zu stark aufquellen und dadurch weich werden, was die Lagerstabilität des Käses negativ beeinträchtigen würde. Je nach Calcium-Konzentration in der Salzlake geben die Käse mehr oder weniger $Ca^{2+}$-Ionen in die Salzlake ab oder nehmen welche auf und je nach Käsesorte wird der Anteil an $Ca^{2+}$-Ionen in der Salzlake zur Stabilisierung der Käserinde angepasst. Daher wird zusätzlich zur NaCl-Konzentration auch die Calcium-Konzentration im Salzbad auf einem kontrolliert hohen Niveau gehalten, um den osmotischen Druck der $Ca^{2+}$-Ionen aus dem Käse heraus durch Nachdosierung von $CaCl_2$-Lösung in das Salzbad möglichst auszugleichen.

Eine Nachdosierung mit NaCl- und $CaCl_2$-Lösung ist erforderlich, wie vorstehend bereits thematisiert, weil die Salzlake bzw. Salzsole im Salzbad mit der Aufnahme der Molke-Menge kontinuierlich an Volumen zunimmt. Dieses zusätzliche Volumen stellt, wegen des begrenzten Aufnahmevolumens des Salzbades, ein Überlaufvolumen dar, das in industriellen großtechnischen Prozessanlagen zunächst beispielsweise in Überlauftanks gestapelt und dann beim sogenannten "Absalzen" gezielt abgelassen wird.

Beim heutigen Absalzen, also dem Ablassen der überschüssigen Salzsole aus dem Salzbadsystem ins Abwasser, wird die darin enthaltene Salz- und Schmutzfracht, also auch noch verwertbares Salz (NaCl und $CaCl_2$), mit dem Abwasser verloren. Da die gelösten Salze NaCl und $CaCl_2$ in dissoziierter Form vorliegen und somit Chlorid-Lieferanten darstellen, trägt daher auch das $CaCl_2$ mit zur Chlorid-Konzentration (Cl$^-$-Ionen) im Abwasser bei.

Beim heutigen Absalzen entsteht demnach, insbesondere wenn es sich um die industrielle großtechnische Herstellung von Käse handelt, das angesprochene Entsorgungsproblem und/oder ein Problem der Abwasserbehandlung, wodurch erhebliche Entsorgungs- und oder Behandlungskosten anfallen können. Darüber hinaus entstehen aber auch Verluste an signifikanten Salzfrachten, die, wenn sie für den Salzungsprozess nachhaltig verloren sind, für sich gesehen einen weiteren beträchtlichen Kostenfaktor darstellen. Das Aufrechterhalten der Hygiene des Salzbades erfordert in der bisher bekannten Verfahrensweise, wie in **Figur 1a** der Zeichnung beispielhaft aufgezeigt, einen zusätzlichen apparativen Aufwand durch Filter und Erhitzer. Während das Filtern der verunreinigten Salzlake beispielsweise im Bypass zum Salzen des Käses bei fortlaufendem Salzungsprozess durchführbar ist, kann ein Aufkochen der Salzlake mit dem Ziel einer Abtötung schädlicher Mikroorganismen nur nach dem Ende des Salzungsprozesses, d.h. durch Unterbrechung der Produktion, oder bei fortlaufender Produktion durch einen weiteren apparativen Aufwand, beispielsweise durch Abzweigung eines Teils der Salzlake und Stapelung derselben in einem Tank in Verbindung mit einer separierten Wärmbehandlung, durchgeführt werden.

In der Druckschrift **[3]**, KAMMERLEHNER, J., Käsesalzungsverfahren - Minimierung der Natriumchloridverluste, Deutsche Milchwirtschaft, Vol. 5, 1993, S.326, 338, 330, 332-333, ISSN 0012-0480, wird ein Natriumchlorid-Recycling-Verfahren im Rahmen des Salzens von Käse offenbart, welches die Kochsalzverluste minimiert und die Umweltbelastung senkt, wenn alle beim Salzen anfallende Flüssigkeit gesammelt und diese wiederverwertet wird und wenn die Lake vollkommen regeneriert wird, indem unter anderem eine Entmineralisierung durch Elektrodialyse und eine Eiweißabtrennung durch Ultrafiltration erfolgt.

Es ist bekannt, salzhaltige Lösungen mittels eines Elektrodialyse-Verfahrens zu entsalzen um vorrangig entsalztes Wasser, das Diluat, zu gewinnen. Hier stellt das mit Salz angereicherte, meist verunreinigte Konzentrat ein Abfallprodukt dar. In der DE 43 24 668 A1 ist beispielsweise ein Verfahren zur Entsalzung von Salzlösungen mittels Elektrodialyse offenbart, mit dem entsalztes Wasser gewonnen und die dem Elektrodialysator zugeführte Salzlösung aufkonzentriert wird.

Weiterhin beschreibt die DE 44 27 478 A1 ein Verfahren zur Behandlung von kochsalzhaltiger Frischlake aus der Bereitung von Sauergemüsen, insbesondere Sauerkraut. Aus der kochsalzhaltigen Frischlake in einem Behälter, die nach der Behandlung des Sauergemüses weitestgehend von dem Sauergemüse separiert und aus dem Behälter abgeführt wird, werden zunächst in einer ersten Trenneinrichtung, einer Faser- und Schwebstoffabtrenneinrichtung, Grobfasern abgetrennt und als Schlamm mit etwa 50 % Wassergehalt ausgebracht und verworfen oder anderweitig verwertet. Aus der aus der ersten Trenneinrichtung abgeführten verbleibenden Frischlake können mittels einer als Ultrafiltrationseinrichtung ausgebildeten zweiten Trenneinrichtung Fein- und Feinststoffanteile als Retentat in Form einer Suspension abgeführt und verworfen oder anderweitig verwendet werden. Allein die derart vorgeklärte Frischlake, das Permeat, gelangt in eine bevorzugt als Elektrodialyse-Einrichtung ausgebildete dritte Trenneinrichtung. Aus ihr wird zum einen infolge geringen Kochsalzgehaltes problemlos entsorgbares, die organischen Bestandteile enthaltendes Diluat und zum anderen nicht recyclierbares Konzentrat abgeführt. Das in der Elektrodialyse-Einrichtung anfallende verbleibende Salzkonzentrat wird in die Kochsalz-Behandlung des nachfolgend zu behandelnden Sauergemüses in den Behälter recycliert, wobei ergänzende Kochsalzmengen zur Aufschärfung des Salzkonzentrats auf eine etwa 25%-ige Kochsalzlauge für das Einsalzen des Sauergemüses eingebracht werden.

Die US 4 205 090 A offenbart ein Verfahren zur Herstellung eines fetthaltigen, mit Lab geronnenen Käses aus Milch, wobei der Käse im Wesentlichen das gesamte Kasein und alle löslichen Proteine der Milch enthält. Das Verfahren umfasst das Trennen der Milch durch Ultrafiltration in ein Filtrat und ein flüssiges Retentat, indem die Milch über halbdurchlässige Membranen geleitet wird. Dabei wird die Milch in eine Reihe von Modulen eingeleitet, die jeweils aus porösen Platten bestehen. Jede der porösen Platten dient als Rahmen für eine der semipermeablen Membranen und die Platten sind durch ein bestimmtes Intervall getrennt, um einen Zwischenraum zu bilden. Die Milch wird in ein Filtrat und in ein Retentat getrennt wird. Das Filtrat wird in Räumen gesammelt, die Paare aufeinanderfolgender Module trennen. Das Retentat zirkuliert durch die Module und wird während seiner Zirkulation an Proteinen stärker konzentriert, wobei die semipermeablen Membranen einen durchschnittlichen Porendurchmesser haben, der in den Bereich fällt, der den Durchtritt von Wasser zulässt. Laktose und in der Milch enthaltene lösliche Mineralsalze passieren die Membran als Filtrat bis zu 30 mμ. Der Flüssigkeitsstrom innerhalb der Zwischenräume reicht aus, um eine Filmbildung auf der Oberfläche der Membranen zu verhindern, die den Durchtritt des Wassers, der Lactose und der löslichen Mineralsalze durch die Membranen verhindern würde. Die Trennung erfolgt bei einem Druck von 1 bis 50 kg/cm$^2$ und derart, dass im Wesentlichen das gesamte Kasein und die löslichen Proteine der Milch in dem flüssigen Retentat zurückgehalten werden. Die Trennung wird fortgesetzt, bis ein frei fließendes flüssiges Retentat, das getrennt von dem Filtrat gesammelt wird, erhalten wird und das im Wesentlichen die gleiche Gesamtproteinkonzentration und Konzentration an nicht-proteinlöslichen Bestandteilen aufweist, wie sie bekanntermaßen in den aus Milch stammenden Komponenten eines gewünschten natürlichen Käses am Ende des Molke-Entwässerungsprozesses vorhanden sind. Danach erfolgt ein Hinzufügen von ausreichend Lab zu dem Retentat, um eine Gerinnung und Käsebildung zu bewirken.

Die US 2009/142 459 A1 beschreibt ein Verfahren zum Demineralisieren von Molke, umfassend:

a) Erweichen der Molke durch Verwendung von kationischem Ionenaustausch und
b) Unterwerfen des Produkts von Schritt a) einer bipolaren Elektrodialyse, wobei besagtes Verfahren zu verdünnten kaustischen und sauren Nebenproduktströmen führt.

Die EP 2 745 704 A1 offenbart ein Verfahren zur Herstellung eines Salzes aus Milch, das mindestens die Schritte umfasst:

- Herstellung einer konzentrierten Lösung aus einwertigen Solemineralien, die durch Elektrodialyse von Molke gewonnen werden, und
- Herstellung eines Milchsalzes durch mindestens eine Kristallisationsstufe der konzentrierten Lösung einwertiger Mineralien.

Es ist Aufgabe der vorliegenden Erfindung, ein Verfahren und eine Anlage zur Behandlung von Salzlake in Salzbädern für das Salzen von Käse der gattungsgemäßen Art zu schaffen, mit denen die Hygiene des Salzbades verbessert, eine signifikante Rückgewinnung des eingesetzten Salzes erzielt sowie die Entsorgungskosten für die überschüssige und zu verwerfende Salzlake deutlich reduziert werden.

ZUSAMMENFASSUNG DER ERFINDUNG

Diese Aufgabe wird durch Verfahren mit den Merkmalen des unabhängigen Anspruchs 1 gelöst. Vorteilhafte Ausgestaltungen der Verfahren sind Gegenstand der Unteransprüche. Eine Anlage, die geeignet ist, das Verfahren nach Anspruch 1 durchzuführen, ist Gegenstand des unabhängigen Anspruchs 7. Vorteilhafte Ausgestaltungen der Anlage sind Gegenstand der zugeordneten Unteransprüche.

Das bekannte, gattungsbildende Verfahren zur Behandlung von Salzlake in Salzbädern für ein Salzen von Käse zeichnet sich dadurch aus, dass ein zu salzender Käse absatzweise oder kontinuierlich in ein vorgegebenes Volumen der Salzlake im Salzbad eingebracht, dort in einer bestimmten Verweilzeit das Salzen erfährt und entsprechend absatzweise oder kontinuierlich als gesalzener Käse das Salzbad verlässt. Während der Verweilzeit wird die Salzlake einem Umwälzen unterzogen und es erfolgt infolge des Salzungsprozesses ein Übertritt einer bestimmten Menge an Molke und anderen Bestandteilen aus dem Käse in das vorgegebene Volumen der Salzlake im Salzbad. Zum Konstanthalten des vorgegebenen Volumens wird ein überschüssiges Volumen einer durch die Molke und die Bestandteile verunreinigten Salzlake aus dem Salzbad abgeführt und Konzentrations- und Mengenverluste der Salzlake im Salzbad an Salz und Wasser werden ausgeglichen. Es wird ein Trennen der abgeführten verunreinigten Salzlake durch ein erstes Membran-Trennverfahren in ein von der Molke und den Bestandteilen gereinigtes Salzlake-Permeat und ein mit der Molke und den Bestandteilen verunreinigtes Salzlake-Retentat durchgeführt. Weiterhin ist ein Entsalzen des verunreinigten Salzlake-Retentats durch ein zweites Membran-Trennverfahren vorgesehen, das so eingerichtet ist, dass wenigstens ein Teil gelösten Salzes in einen Strom aufnehmendes Wasser überführt und darin gelöst wird, das Wasser und das darin gelöste Salz eine gereinigte Salzlake bilden und ein entsprechend entsalztes verunreinigtes Salzlake-Retentat als Abwasser verworfen wird. Schließlich erfolgt ein Einleiten des gereinigten Salzlake-Permeats und der gereinigten Salzlake in die Salzlake im Salzbad,

Das Konstanthalten des vorgegebenen Volumens kann beispielsweise dadurch auf einfache Weise verwirklicht werden, dass das überschüssige Volumen in Form eines Überlaufvolumens realisiert ist.

Ein an sich bekannter verfahrenstechnischer Lösungsgedanke besteht darin, die abgeführte verunreinigte Salzlake durch ein erstes Membran-Trennverfahren in ein von der Molke und den Bestandteilen gereinigtes Salzlake-Permeat und ein mit der Molke und den Bestandteilen verunreinigtes Salzlake-Retentat zu trennen. Dabei werden erfindungsgemäß im gereinigten Salzlake-Permeat erste Anteile und im verunreinigten Salzlake-Retentat zweite Anteile von gelöstem Salz mitgeführt. Damit kann das gereinigte Salzlake-Permeat als gereinigte Salzlösung ins Salzbad zurückgeführt werden, wohingegen das verunreinigte Salzlake-Retentat die gesamte Schmutzfracht austrägt. Salze können bei diesem Trennungsprozess die Membran ungehindert passieren, wohingegen die verunreinigenden Bestandteile im Retentat zurückgehalten werden. Somit finden sich im Retentat und Permeat überschlägig die gleichen Konzentrationen an NaCl und $CaCl_2$. Es ist zweckmäßig, dem ersten Membran-Trennverfahren, in Strömungsrichtung der verunreinigten Salzlake gesehen, eine Einrichtung zur Abscheidung grober Bestandteile, beispielsweise Siebfilter, vorzuschalten.

Ein zweiter entscheidender Lösungsgedanke besteht darin, dass ein erstes Mengenverhältnis zwischen Salzlake-Permeat und Salzlake-Retentat dergestalt eingestellt wird, dass die Menge an Salzlake-Retentat mindestens der Menge an Molke und Bestandteilen entspricht, die in der Verweilzeit in die Salzlake im Salzbad übertritt. Dieses Merkmal sichert die Einhaltung einer ausgeglichenen Mengenbilanz der an dem gesamten Behandlungsprozess beteiligten Stoffströme.

Ein an sich bekannter Lösungsgedanke sieht ein Entsalzen des verunreinigten Salzlake-Retentats durch ein zweites Membran-Trennverfahren vor, das so eingerichtet ist, dass wenigstens ein Teil der zweiten Anteile von im verunreinigten Salzlake-Retentat gelöstem Salz in einen Strom aufnehmendes Wasser überführt und darin gelöst wird. Dabei bilden das Wasser und das darin gelöste Salz eine gereinigte Salzlake und ein entsprechend entsalztes verunreinigtes Salzlake-Retentat wird als ein Abwasser verworfen. Durch diese Maßnahme einer weitgehenden Teilentsalzung kann auch die Salzfracht des Salzlake-Retentats größtenteils zurückgewonnen und als gereinigte Salzlake in das Salzbad zurückgeführt werden.

Ein dritter Lösungsgedanke sieht ein Bemessen eines Stroms der abgeführten verunreinigter Salzlake in Verbindung mit dem eingestellten ersten Mengenverhältnis zwischen Salzlake-Permeat und Salzlake-Retentat dergestalt vor, dass der Chlorid-Gehalt im entsalzten verunreinigten Salzlake-Retentat, das als Abwasser verworfen wird, einen gesetzlichen Grenzwert für die Einleitung dieses Abwassers in Oberflächenwasser nicht überschreitet. Zum einen ist dafür Sorge zu tragen, dass das überschüssige Volumen aufgrund der einzuhaltenden Mengenbilanz aus dem System abgeführt wird, zum andern ist diese Bedingung zwar notwendig, aber nicht hinreichend, denn das Salzlake-Permeat und das Salzlake-Retentat müssen aufgrund technologischer Randbedingungen für das erste Membran-Trennverfahren in dem nicht beliebig frei wählbaren ersten Mengenverhältnis zueinander stehen (sog. Volumen-Konzentrations-Faktor VCF). Aus diesem Grund ist der Strom (Feed) der abgeführten und dem ersten Membran-Trennverfahren zugeführten verunreinigten Salzlake eine in Relation zu dem eingestellten ersten Mengenverhältnis und nach Maßgabe eines vorgenannten einzuhaltenden gesetzlichen Grenzwertes ebenfalls in Grenzen frei zu bemessende Größe.

Ein vierter Lösungsgedanke sieht vor, ein gesteuertes Zusammenführen des gereinigten Salzlake-Permeats und der gereinigten Salzlake in einem zweiten Mengenverhältnis vorzunehmen, durch das ein Aufkonzentrieren der Mischung aus beiden Komponenten auf eine Salz-Konzentration erfolgt, die wenigstens einer erforderlichen Salzbad-Konzentration entspricht. Hierdurch wird die Herstellung einer ausgeglichenen Salzbilanz auf einfache Weise ermöglicht. Das Mischungsverhältnis der beiden Komponenten kann durch ein geeignetes Steuerungsverfahren verändert werden, das auch auf die Zufuhr des Wassers zur zweiten Membran-Trenneinrichtung, den Strom aufnehmenden Wassers, Einfluss nimmt.

Durch das vorstehend beschriebene erste Mengenverhältnis wird nur ein kleinerer Anteil der verunreinigten Salzlake aus dem Salzbad als verunreinigtes Salzlake-Retentat mit dem zweien Membran-Trennverfahren behandelt, während der Großteil als gereinigtes Salzlake-Permeat direkt zum Salzbad rezirkuliert wird. Das bedeutet, dass auch das Verhältnis zwischen Natrium und Calcium im Wesentlichen unverändert bleibt und nicht durch das erste Membran-Trennverfahren verschoben wird.

Die Vorteile des erfindungsgemäßen Verfahrens in seiner Gesamtheit bestehen neben der weitgehenden Rückgewinnung des eingesetzten Salzes und seine Rückführung in das Salzbad weiterhin darin, dass die Chlorid-Konzentration im Abwasser deutlich gesenkt wird, und zwar im günstigsten Falle unter die zugelassenen Einleit-Grenzwerte für Oberflächenwasser. Durch das Salzrecycling werden erhebliche Entsorgungskosten vermieden und signifikante Mengen an Salz und damit entsprechende Gestehungskosten eingespart. Das erfindungsgemäße Verfahren ist mit Blick auf höhere Käsedurchsatzleistungen uneingeschränkt skalierbar, sodass Produktions-Erweiterungen, die ansonsten durch Begrenzung in der Abwasser-Entsorgung nicht möglich wären, vorgenommen werden können.

Durch die kontinuierliche Salzbad-Filtration steigt in vorteilhafter Weise die Hygiene des Salzbades, was sich positiv auf die Käsequalität auswirkt. Es begünstigt den Stoffaustauschprozess zwischen Käse und Salzlake positiv, wenn die Salzlake während der Verweilzeit einem Umwälzen unterzogen wird.

Die vorgenannten Erfordernisse an das erste Membran-Trennverfahren werden am zielführendsten erfüllt, wie dies vorgeschlagen wird, wenn das erste Membran-Trennverfahren als Ultrafiltrations-Verfahren ausgebildet ist, wohingegen das zweite Membran-Trennverfahren mit Blick auf die vorgenannten Erfordernisse als Elektrodialyse-Verfahren ausgestaltet ist.

Eine optimale Lösung der der Erfindung zugrunde liegenden Aufgabe wird erreicht, wenn das erste Membran-Trennverfahren als Ultrafiltrations-Verfahren und gleichzeitig das zweite Membran-Trennverfahren als Elektrodialyse-Verfahren ausgebildet sind.

Das erfindungsgemäße Verfahren dient in bevorzugter Weise der Behandlung von Salzlake, in der sich Salz in Gestalt von Natriumchlorid und/oder Calciumchlorid in Lösung befinden bzw. befindet und in der die die Salzlake verunreinigenden Bestandteile in Gestalt von Eiweiß, Milchzucker, Milchsäure, sonstige Rückstände und Staub auftreten.

Eine Anlage zur Behandlung von Salzlake in Salzbädern für ein Salzen von Käse, die zur Durchführung des erfindungsgemäßen Verfahrens geeignet ist, weist in an sich bekannter Weise die folgenden Merkmale auf:

- eine Salzbad-Einheit, die in dem Salzbad die Salzlake aufnimmt;
- eine Käse-Bereitstellungseinheit, aus der ein zu salzender Käse dem bestimmten Volumen der Salzlake im Salzbad absatzweise oder kontinuierlich zugeführt wird;
- eine Salz-Bereitstellungseinheit, aus der Salz der Salzlake im Salzbad zugeführt wird;
- eine Wasser-Bereitstellungseinheit, die Wasser für die Salzlake im Salzbad bereitstellt und
- eine Käse-Aufnahmeeinheit, die einen in der Salzlake im Salzbad in einer Verweilzeit gesalzenen Käse entsprechend absatzweise oder kontinuierlich aufnimmt.

Im Unterschied zum gattungsbildenden Stand der Technik ist die Anlage erfindungsgemäß dadurch gekennzeichnet,

- dass eine erste Salzlake-Trenneinheit über eine Salzlake-Abführleitung mit dem Salzbad fluidgängig verbunden und die erste Salzlake-Trenneinheit dazu eingerichtet ist, mittels eines ersten Membran-Trennverfahrens eine aus dem Salzbad abgeführte, durch Molke und andere Bestandteile aus dem Käse verunreinigte Salzlake in ein von der Molke und den Bestandteilen gereinigtes Salzlake-Permeat und ein mit der Molke und den Bestandteilen verunreinigtes Salzlake-Retentat zu trennen, wobei im gereinigten Salzlake-Permeat erste Anteile und im verunreinigten Salzlake-Retentat zweite Anteile von gelöstem Salz mitgeführt werden;
- dass eine Steuereinrichtung vorgesehen ist, die über einen ersten Steuerungsanschluss mit einer Zustandsinformation des Salzbades und über einen zweiten Steuerungsanschluss mit der ersten Salzlake-Trenneinheit in steuerungstechnischer Verbindung steht und dazu eingerichtet ist, einen Strom der abgeführten verunreinigten Salzlake zu bemessen und ein erstes Mengenverhältnis zwischen dem Salzlake-Permeat und dem Salzlake-Retentat dergestalt einzustellen, dass die Menge an Salzlake-Retentat mindestens der Menge an Molke und Bestandteilen entspricht, die in der Verweilzeit in die Salzlake im Salzbad übertritt;
- dass eine zweite Salzlake-Trenneinheit vorgesehen und dazu eingerichtet ist, mittels eines zweiten Membran-Trennverfahrens das verunreinigte Salzlake-Retentat durch Entsalzen in ein Abwasser zu überführen, dessen Chlorid-Gehalt einen gesetzlichen Grenzwert für die Einleitung in Oberflächenwasser nicht überschreitet, wobei die zweiten Anteile von im verunreinigten Salzlake-Retentat gelöstem Salz in einen Strom des Wassers überführt und darin gelöst werden und das Wasser und das darin gelöste Salz eine gereinigte Salzlake bilden;
- dass die zweite Salzlake-Trenneinheit einerseits mit einer Konzentrat-Ablaufleitung für das verunreinigte Salzlake-Retentat, die zu der ersten Salzlake-Trenneinheit führt, und mit einer ersten Salzlake-Zuführleitung für die gereinigte Salzlake und andererseits mit einer Abwasser-Leitung für das Abwasser mit einer Abwasser-Aufnahmeeinrichtung und über eine Wasser-Zuführleitung für das Wasser mit der Wasser-Bereitstellungseinheit jeweils fluidgängig verbunden ist und
- dass eine Permeat-Ablaufleitung für das gereinigte Salzlake-Permeat und die Salzlake-Zuführleitung jeweils fluidgängig mit dem Salzbad verbunden sind.

Die Kombination einer der zweiten Salzlake-Trenneinheit vorgeschalteten ersten Salzlake-Trenneinheit, wobei beiden unterschiedliche Trennaufgaben zukommen, ist ein vorteilhaftes Merkmal, das es erlaubt, die verunreinigte Salzlake in ein weiter zu behandelndes verunreinigtes Salzlake-Retentat und ein dem Salzbad ohne weitere Behandlung zuzuführendes gereinigtes Salzlake-Permeat aufzutrennen. Darüber hinaus ermöglicht es eine Steuereinrichtung, einen Strom der abgeführten verunreinigten Salzlake zu bemessen und ein erstes Mengenverhältnis zwischen dem Salzlake-Permeat und dem Salzlake-Retentat dergestalt einzustellen, dass die Menge an Salzlake-Retentat mindestens der Menge an Molke und Bestandteilen entspricht, die in der Verweilzeit in die Salzlake im Salzbad übertritt.

Die weiteren Vorteile und Besonderheiten gegenüber einer Anlage der gattungsgemäßen Art nach dem Stand der Technik ergeben sich sinngemäß aus dem vorstehend beschriebenen erfindungsgemäßen Verfahren, das mit der erfindungsgemäßen Anlage durchführbar ist.

Die erste Salzlake-Trenneinheit ist zielführend am besten als Ultrafiltrationseinheit und, unabhängig von dieser Ausgestaltung, ist die zweite Salzlake-Trenneinheit zielführend am besten als Elektrodialyseeinheit ausgebildet. Eine optimale Lösung der der Erfindung zugrunde liegenden Aufgabe wird erreicht, wenn die erste Salzlake-Trenneinheit als Ultrafiltrationseinheit und gleichzeitig die zweite Salzlake-Trenneinheit als Elektrodialyseeinheit ausgebildet sind.

Die Elektrodialyseeinheit besteht zur Erzielung einer hinreichenden mengenmäßigen Trennleistung in der Regel aus mehreren Ionentauschermembranen-Stapeln, wenigstens jedoch aus einem Stapel.

Weiterhin sieht eine vorteilhafte Ausgestaltung der Anlage vor, dass die Permeat-Ablaufleitung und die erste Salzlake-Zuführleitung in einer Salzlake-Aufkonzentrierungseinheit fluidgängig zusammengeführt und von dort über eine zweite Salzlake-Zuführleitung fluidgängig mit dem Salzbad verbunden sind. Dadurch wird einerseits eine einfache Verrohrung und andererseits wird mit der Aufkonzentrierungseinheit eine Stelleinrichtung geschaffen, mit der die erfindungsgemäße Steuerung der Salz-Konzentration in der zum Salzbad führenden zweiten Salzlake-Zuführleitung durchgeführt wird.

Das notwendige Aufschärfen der Salzbad-Konzentration auf einen erforderlichen Wert gestaltet sich sehr einfach, wenn die Steuereinrichtung über einen dritten Steuerungsanschluss in steuerungstechnischer Verbindung mit der Salzlake-Aufkonzentrierungseinheit steht und dazu eingerichtet ist, ein gesteuertes Zusammenführen des gereinigten Salzlake-Permeats und der gereinigten Salzlake in einem zweiten Mengenverhältnis zu erreichen, durch das ein Aufkonzentrieren der Mischung aus beiden Komponenten auf eine Salz-Konzentration erfolgt, die wenigstens der erforderlichen Salzbad-Konzentration entspricht.

## KURZBESCHREIBUNG DER ZEICHNUNGEN

Es zeigen

**Figur 1**    ein Fließschema eines bekannten Verfahrens und gleichzeitig in schematischer Darstellung die Anordnung einer bekannten ersten Anlage gemäß dem Stand der Technik, von dem die vorliegende Erfindung im Wesentlichen ausgeht und

**Figur 1a**    gleichfalls ein Fließschema eines weiteren bekannten Verfahrens und gleichzeitig in schematischer Darstellung, ausgehend von der bekannten ersten Anlage, die Anordnung einer bekannten zweiten Anlage, die einen Ausschnitt aus der ersten Anlage gemäß **Figur 1** zeigt, wobei eine verunreinigte Salzlake bei Bedarf einem Filtern und Heizen (Aufkochen) unterzogen werden kann.

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausführungsformen eines bevorzugten erfindungsgemäßen Verfahrens und einer erfindungsgemäßen Anlage zu dessen Durchführung realisiert ist, ist in der Zeichnung eine bevorzugte erfindungsgemäße Anlage dargestellt, mit der eine bevorzugte Ausgestaltung des erfindungsgemäßen Verfahrens durchgeführt wird. Die erfindungsgemäße Anlage wird nachfolgend nach Aufbau und Funktion und das erfindungsgemäße Verfahren wird nachfolgend in Verbindung mit der erfindungsgemäßen Anlage beschrieben.

Es zeigen

**Figur 2**    ein Fließschema des erfindungsgemäßen Verfahrens und gleichzeitig in schematischer Darstellung die Anordnung der erfindungsgemäßen Anlage mit einer als Ultrafiltrationseinheit ausgebildeten ersten und einer als Elektrodialyseeinheit ausgebildeten zweiten Salzlake-Trenneinheit;

**Figur 3**    in schematischer Darstellung die Anordnung der bekannten Anlage gemäß **Figur 1**, ergänzt durch Mengen- und Salzströme, und

**Figur 4**    in schematischer Darstellung die Anordnung der erfindungsgemäßen Anlage gemäß **Figur 2**, ergänzt durch Mengen- und Salzströme.

## DETAILLIERTE BESCHREIBUNG

Eine bekannte erste Anlage 1 **(Figur 1)** zur Behandlung von Salzlake SL in Salzbädern 2.1 für ein Salzen SA von (ungesalzenem) Käse K besteht aus einer Salzbad-Einheit 2, die in dem Salzbad 2.1 ein vorgegebenes Volumen V der Salzlake SL aufnimmt. Der ungesalzene Käse K wird aus einer Käse-Bereitstellungseinheit 4 (Käse bereitstellen KB) dem Salzbad 2.1 über eine Käse-Zuführeinrichtung 16 absatzweise oder kontinuierlich zugeführt. Aus einer Salz-Bereitstellungseinheit 6 (Salz bereitstellen SB) wird zum Zwecke der Aufschärfung einer erforderlichen Salzbad-Konzentration c im Salzbad 2.1 über eine Salz-Zufuhreinrichtung 18 Salz S in das Salzbad 2.1 eingeleitet und zum Zwecke eines ggf. erforderlichen Ausgleichs eines Mengenverlustes wird aus einer Wasser-Bereitstellungseinheit 10 (Wasser bereitstellen WB) über eine Wasser-Zuführleitung 20 Wasser W dem Salzbad 2.1 zugeführt. Weiterhin ist eine Käse-Aufnahmeeinheit 8 (Käse aufnehmen KA), die einen im Salzbad 2.1 durch das Salzen SA gesalzenen Käse KS auf dem Weg über eine Käse-Abführeinrichtung 22 entsprechend absatzweise oder kontinuierlich aufnimmt.

Im Salzbad 2.1 liegt die an den jeweils in einer Verweilzeit $\tau$ zu salzenden ungesalzenen Käse K angepasste erforderliche Salzbad-Konzentration c vor. Die Salzlake SL wird beispielsweise über eine als Bypass zum Salzbad 2.1 ausgebildete Umlaufleitung 2.2 umgewälzt (Umwälzen UW). Es sind auch andere Umwälzeinrichtungen ausgeführt, die innerhalb des Salzbades 2.1 eine umwälzende Wirkung entfalten (z.B. Pumpe). Eine beim Salzen SA aus dem ungesalzenen bzw. gesalzenen Käse K, KS austretende Molke M und andere Bestandteile B gelangen in die Salzlake SL, wodurch diese im Verlauf der Verweilzeit τ zu einer verunreinigten Salzlake SL* wird.

Die verunreinigte Salzlake SL* übersteigt im Verlauf der Verweilzeit τ durch den Übertritt der Molke M und der anderen Bestandteile B ein vorgegebenes Fassungsvermögen des Salzbades 2.1, das vorgegebene Volumen V, und ein daraus resultierendes überschüssiges Volumen ∆V, ein Überlaufvolumen, wird zwangsläufig über eine Salzlake-Abführleitung 24 beispielsweise einem Überlauftank 12 zugeführt, dort gestapelt (Stapeln ST) und von dort im Bedarfsfall über eine Salzlake-Ablassleitung 26 in einen Gully 14 verworfen (Absalzen A).

Eine bekannte zweite Anlage 1* **(Figur 1a)** zur Behandlung von Salzlake SL in Salzbädern 2.1 für ein Salzen SA von (ungesalzenem) Käse K ist im Wesentlichen baugleich zu der vorstehend beschriebenen, bekannten ersten Anlage 1 aufgebaut. Ein Unterschied besteht darin, dass verunreinigte Salzlake SL* im Bedarfsfall durch entsprechende Schaltung eines in der Salzlake-Abführleitung 24 angeordneten ersten Absperrventils 29.1 und eines zweiten Absperrventils 29.2, das in einer von der Salzlake-Abführleitung 24 abzweigenden Abzweigleitung 29 angeordnet ist, von der Salzlake-Abführleitung 24 abgezweigt und über einen in der Abzweigleitung 29 angeordneten Filter 27 (Filtern F) und einen sich anschließenden Erhitzer 28 (Heizen bzw. Aufkochen H) von Verunreinigungen und schädlichen Mikroorganismen befreit und dem Salzbad 2.1 als gefilterte und aufgekochte Salzlake SL+ zugeführt wird. Der Erhitzer 28 ist vorzugsweise ein sekundärseitig mit einem Wärmeträgermedium WM beaufschlagter Rekuperator. Die aus dem Filter 27 abzuführenden Verunreinigungen werden in den Gully 14 abgeleitet.

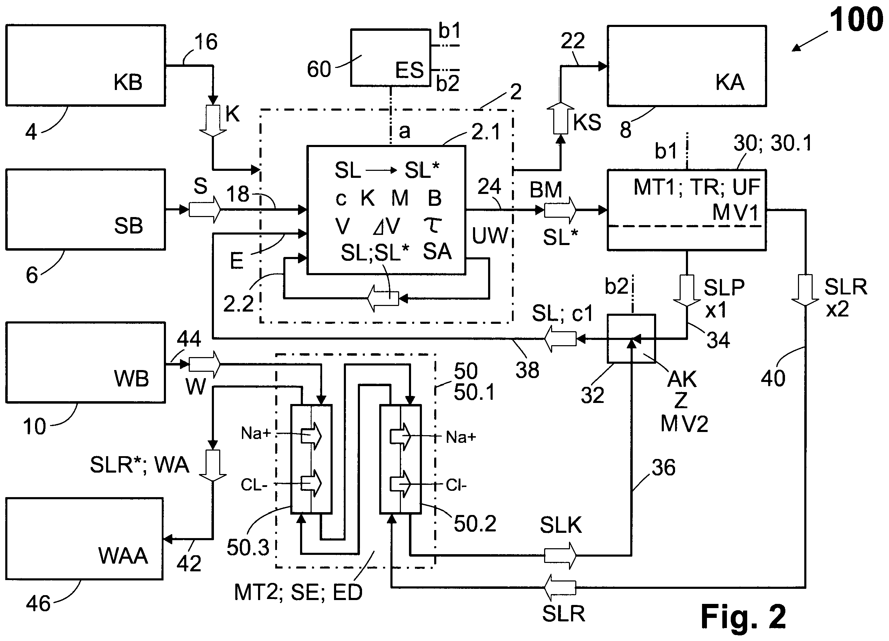

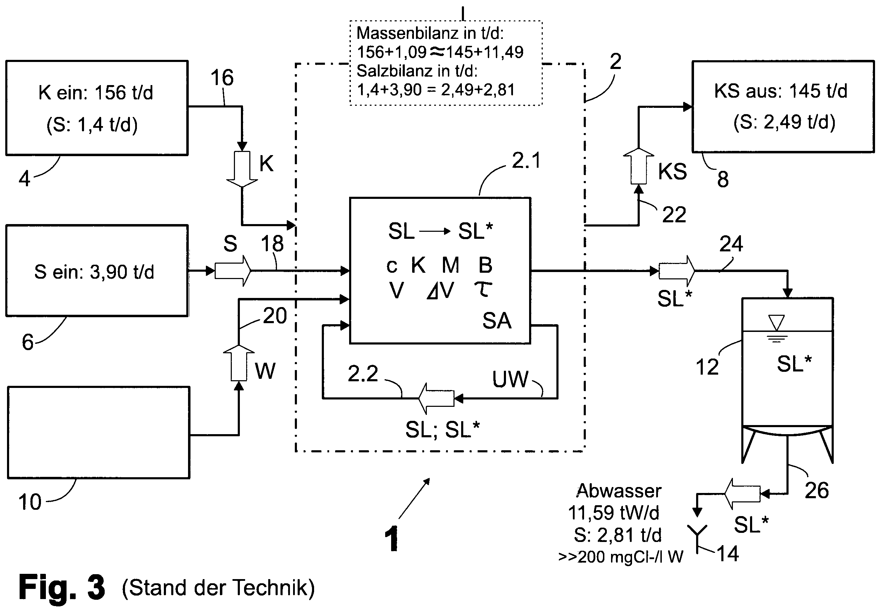

Eine erfindungsgemäße Anlage 100 **(Figur 2)** zur Behandlung von Salzlake SL in Salzbädern 2.1 für ein Salzen SA von (ungesalzenem) Käse K kann, wie im Ausführungsbeispiel gegeben, hinsichtlich der zu der bekannten ersten Anlage 1 gemäß **Figur 1** genannten Bauteile, Merkmale und zugeordneten Funktionen identisch oder nahezu identisch aufgebaut sein. Es handelt sich hierbei um alle in der Bezugszeichenliste unter den **Figuren 1, 3** aufgelisteten Bezugszeichen mit Ausnahme von Überlauftank 12, Gully 14, Wasserzuführleitung 20, Salzlake-Ablassleitung 26, Absalzen A und Stapeln ST. Um Wiederholungen zu vermeiden, wird diesbezüglich auf die Beschreibung zu **Figur 1** verwiesen.

Gegenüber der bekannten ersten Anlage 1 ist die erfindungsgemäße Anlage 100 wie folgt aufgebaut. Eine erste Salzlake-Trenneinheit 30 (Trennen TR) ist über die Salzlake-Abführleitung 24 mit dem Salzbad 2.1 fluidgängig verbunden. Die erste Salzlake-Trenneinheit 30 ist dazu eingerichtet, mittels eines ersten Membran-Trennverfahrens MT1 die aus dem Salzbad 2.1 abgeführte verunreinigte Salzlake SL* in ein gereinigtes Salzlake-Permeat SLP und ein verunreinigtes Salzlake-Retentat SLR zu trennen, wobei im gereinigten Salzlake-Permeat SLP erste Anteile x1 von gelöstem Salz S mitgeführt und Molke M und andere Bestandteile B, die die verunreinigte Salzlake SL* verunreinigen, im verunreinigten Salzlake-Retentat SLR zurückgehalten werden. Das gereinigte Salzlake-Permeat SLP wird über eine Permeat-Ablaufleitung 34 und das verunreinigte Salzlake-Retentat SLR wird über eine Retentat-Ablaufleitung 40 abgeführt.

Es ist eine Steuereinrichtung 60 vorgesehen, die über einen ersten Steuerungsanschluss a mit einer Zustandsinformation des Salzbades 2.1 und über einen zweiten Steuerungsanschluss b1 mit der ersten Salzlake-Trenneinheit 30 in steuerungstechnischer Verbindung steht. Die Steuerungseinrichtung 60 ist dazu eingerichtet, einen Strom der abgeführten verunreinigten Salzlake SL* zu bemessen bzw. auf einen notwendigen Volumenstrom einzustellen (Bemessen BM) und ein erstes Mengenverhältnis MV1 zwischen dem Salzlake-Permeat SLP und dem Salzlake-Retentat SLR dergestalt einzustellen (Einstellen ES), dass die Menge an Salzlake-Retentat SLR mindestens der Menge an Molke M und anderen Bestandteilen B entspricht, die in der Verweilzeit τ in die Salzlake SL im Salzbad 2.1 übertritt;

Es ist eine zweite Salzlake-Trenneinheit 50 vorgesehen und dazu eingerichtet, mittels eines zweiten Membran-Trennverfahrens MT2 das verunreinigte Salzlake-Retentat SLR durch Entsalzen SE in ein Abwasser WA zu überführen. Dabei wird wenigstens ein Teil zweiter Anteile x2 von im verunreinigten Salzlake-Retentat SLR gelöstem Salz S in einen Strom des Wassers W, das über eine Wasser-Zuführleitung 44 aus der Wasser-Bereitstellungseinheit 10 zugeführt wird (Wasser bereitstellen WB), überführt und das Wasser W und das darin gelöste Salz S bilden eine gereinigte Salzlake SLK.

Die zweite Salzlake-Trenneinheit 50 ist einerseits mit der Retentat-Ablaufleitung 40 für das verunreinigte Salzlake-Retentat SLR, die zu der ersten Salzlake-Trenneinrichtung 30 führt, und mit einer ersten Salzlake-Zuführleitung 36 für die gereinigte Salzlake SLK jeweils fluidgängig verbunden. Andererseits ist die Salzlake-Trenneinheit 50 mit einer Abwasser-Ablaufleitung 42 für das Abwasser WA bzw. für ein entsalztes verunreinigtes Salzlake-Retentat SLR* mit einer Abwasser-Aufnahmeeinrichtung 46 (Abwasser aufnehmen WAA) und über die Wasser-Zuführleitung 44 für das Wasser W mit der Wasser-Bereitstellungseinheit 10 jeweils fluidgängig verbunden.

Die Permeat-Ablaufleitung 34 für das gereinigte Salzlake-Permeat SLP und die Salzlake-Zuführleitung 36 sind in einer ersten Ausführungsform jeweils fluidgängig mit dem Salzbad 2.1 verbunden.

Gemäß einer zweiten Ausführungsform sind die Permeat-Ablaufleitung 34 und die erste Salzlake-Zuführleitung 36 in einer Salzlake-Aufkonzentrierungseinheit 32 fluidgängig zusammengeführt (gesteuertes Zusammenführen Z; Aufkonzentrieren AK) und von dort über eine zweite Salzlake-Zuführleitung 38 fluidgängig mit dem Salzbad 2.1 verbunden (Einleiten E). Das gesteuerte Zusammenführen Z erfolgt mit einem zweiten Mengenverhältnis MV2 zwischen dem gereinigten Salzlake-Permeat SLP und der gereinigten Salzlake SLK. Zu diesem Zweck steht die Steuereinrichtung 60 über einen dritten Steuerungsanschluss b2 in steuerungstechnischer Verbindung mit der Salzlake-Aufkonzentrierungseinheit 32. In letzterer werden die beiden Mischungskomponenten so bemessen, dass sich in der Mischung eine Salz-Konzentration c1 einstellt, die wenigstens der erforderlichen Salzbad-Konzentration c entspricht.

Gemäß einer vorteilhaften und besonders zielführenden Ausgestaltung ist die erste Salzlake-Trenneinheit 30 als Ultrafiltrationseinheit 30.1 (Ultrafiltrations-Verfahren UF) ausgebildet, die beispielsweise das erste Mengenverhältnis $MV1 = 3,6$ (einen sogenannten Volumen-Konzentrations-Faktor VCF) aufweist. Die Konsequenzen aus diesem Parameter werden in dem weiter unten angegebenen Beispiel (Mengenbilanzen) aufgezeigt.

Gemäß einer weiteren vorteilhaften und besonders zielführenden Ausgestaltung ist die zweite Salzlake-Trenneinheit 50 als eine Elektrodialyseeinheit 50.1 (Elektrodialyse-Verfahren ED) ausgebildet. Die Elektrodialyseeinheit 50.1 weist wenigstens einen ersten lonentauschermembranen-Stapel 50.2; 50.3; ... auf.

Durch den Wirkmechanismus des Elektrodialyse-Verfahrens ED treten aus dem verunreinigten Salzlake-Retentat SLR in hohem Maße Natrium-Ionen $Na^+$ und in sehr geringerem Maße Calcium-Ionen $Ca^{2+}$ (nicht dargestellt) und in entsprechend hohem bzw. in sehr geringem Maße Chlor-Ionen Cl- (Chlorid) in den der Elektrodialyseeinheit 50.1 über die Wasser-Zuführleitung 44 zugeführten Strom Wasser W ein und bilden in der aus der Elektrodialyseeinheit 50.1 ausmündenden ersten Salzlake-Zuführleitung 36 die gereinigte Salzlake SLK.

Optimale Trennergebnisse werden erzielt, wie dies ebenfalls vorgesehen ist, wenn die erste Salzlake-Trenneinheit 30 als Ultrafiltrationseinheit 30.1 ausgebildet ist und in Verbindung mit der als Elektrodialyseeinheit 50.1 ausgebildeten zweiten Salzlake-Trenneinheit 50 betrieben wird.

Das mit der vorstehend beschriebenen erfindungsgemäßen Anlage 100 durchführbare Verfahren weist die folgenden an sich bekannten gattungsbildenden Merkmale auf **(Figur 2).** Der ungesalzene Käse K wird absatzweise oder kontinuierlich in das vorgegebene Volumen V der Salzlake SL des Salzbades 2.1 eingebracht, erfährt dort in der bestimmten Verweilzeit τ das Salzen SA und verlässt anschließend entsprechend absatzweise oder kontinuierlich als gesalzener Käse KS das Salzbad 2.1. Beim Salzen SA treten Molke M und andere Bestandteile B aus dem Käse K, KS in das vorgegebene Volumen V über. Zum Konstanthalten des vorgegebenen Volumens V wird das überschüssige Volumen ΔV der durch die Molke M und die anderen Bestandteile B verunreinigten Salzlake SL* aus dem Salzbad 2.1 abgeführt. Konzentrations- und Mengenverluste der Salzlake SL werden im Salzbad 2.1 durch Zufuhr von Salz S und Wasser W ausgeglichen.

Erfindungsgemäße Verfahrensschritte (i) bis (iv) sind die folgenden:

(i) Im gereinigten Salzlake-Permeat SLP werden erste Anteile x1 und im verunreinigten Salzlake-Retentat SLR werden zweite Anteile x2 von gelöstem Salz S mitgeführt. Das erste Membran-Trennverfahren MT1 ist dazu eingerichtet, im gereinigten Salzlake-Permeat SLP erste Anteile x1 von gelöstem Salz S mitzuführen und Bestandteile B, die die verunreinigte Salzlake SL* verunreinigen, im verunreinigten Salzlake-Retentat SLR zurückzuhalten.

(ii) Einstellen ES des ersten Mengenverhältnisses MV1 zwischen Salzlake-Permeat SLP und Salzlake-Retentat SLR dergestalt, dass die Menge an Salzlake-Retentat SLR mindestens der Menge an Molke M und Bestandteilen B entspricht, die in der Verweilzeit τ in die Salzlake SL im Salzbad 2.1 übertritt.

(iii) Bemessen BM eines Stroms der abgeführten verunreinigter Salzlake SL* in Verbindung mit dem eingestellten ersten Mengenverhältnis MV1 dergestalt, dass ein Chlorid-Gehalt Cl- im entsalzten verunreinigten Salzlake-Retentat SLR* einen gesetzlichen Grenzwert für die Einleitung des entsalzten verunreinigten Salzlake-Retentats SLR* in Oberflächenwasser nicht überschreitet.

(iv) Ein gesteuertes Zusammenführen Z des gereinigten Salzlake-Permeats SLP und der gereinigten Salzlake SLK in einem zweiten Mengenverhältnis MV2, durch das ein Aufkonzentrieren AK der Mischung aus beiden Komponenten auf eine Salz-Konzentration c1 erfolgt, die wenigstens einer erforderlichen Salzbad-Konzentration c entspricht.

Das erste Membran-Trennverfahren MT1 ist bevorzugt als Ultrafiltrations-Verfahren UF und das zweite Membran-Trennverfahren MT2 ist bevorzugt als Elektrodialyse-Verfahren ED ausgebildet, wobei optimale Trennergebnisse erzielt werden, wie dies ebenfalls vorgesehen ist, wenn das erste Membran-Trennverfahren MT1 als Ultrafiltrations-Verfahren UF ausgebildet ist und in Verbindung mit dem als Elektrodialyse-Verfahren ED ausgebildeten zweiten Membran-Trennverfahren MT2 betrieben wird.

Das Verfahren ist in besonderer Weise geeignet für ein Recycling von Salz S in verunreinigter Salzlake SL* aus dem Prozess des Salzens SA von Käse in Gestalt von Natriumchlorid (NaCl) und/oder Calciumchlorid ($CaCl_2$) und für eine Abscheidung von den anderen Bestandteilen B aus der verunreinigten Salzlake SL* wie Eiweiß, Milchzucker, Milchsäure, sonstige Rückstände und Staub.

Die nachfolgenden rechnerischen Abschätzungen zeigen eine Mengen- und Salzbilanz für das erfindungsgemäße Verfahren auf, das mit der vorstehend beschriebenen erfindungsgemäßen Anlage 100 durchgeführt wird, und die damit einhergehenden abgeschätzten Salz- und Kosteneinsparungen.

**Beispiele**

Ausgangssituation in vielen Käsereien:

- Absatzweise oder kontinuierliche Zufuhr von Käse **K** mit **X kgK/h** und einem Eingangs-Salzgehalt **xs** in **kgS/kgK** in ein Salzbad 2.1 mit vorgegebenem Volumen V an Salzlake SL und entsprechende absatzweise oder kontinuierliche Abfuhr aus dem Salzbad 2.1 mit **Y KgK/h** und einem Salzgehalt von **ys** in **kgS/kgK.** Es gilt in der Regel: X > Y und xs < ys.
- Die Salzlake SL im Salzbad enthält je nach Käsesorte ca. 20 % NaCl (0,2 kgS/kgSL oder 200 gS/l SL - I: Liter).
- Die Käserinde nimmt Salzlake SL auf, wodurch sie quillt und die Käsematrix der Rinde durchlässig wird.
- Mit fortschreitender Verweilzeit des Käses K im Salzbad 2.1 tritt Wasser (Molke M) durch den osmotischen Druck in die Salzlake SL über, während Salz S aus der Salzlake SL in das Käseinnere diffundiert, wodurch der Käse K nach Gleichung (1) eine Salzmenge

$$\Delta S = Y\ ys - X\ xs \hspace{3cm} (1)$$

aufnimmt.
- Diese vom Käse K aufgenommene Salzmenge $\Delta S$ wird der Salzlake SL des Salzbades 2.1 entnommen. Zusätzlich verdünnt die austretenden Molke M die Salzlake SL, weshalb der Salzlake SL zum Aufrechterhalten der erforderlichen Salzbad-Konzentration c kontinuierlich Salz S hinzugefügt werden muss.
- Die austretende Molke M enthält weitere gelöste/dispergierte Käse-Inhaltsstoffe (unter anderem Proteine, Mineralien, Mikroorganismen, Fette), die in die Salzlake SL im Salzbad 2.1 übergehen, vorstehend als Bestandteile B bezeichnet, und es kontinuierlich verschmutzen (verunreinigte Salzlake SL*).
- Das aus der Käsereimilch stammende und nach der Käseherstellung teils in der Molke M enthaltene Calcium geht als dissoziierte $Ca^{2+}$-Ionen mit der Molke ins Salzbad über. Durch diesen Verlust an Calcium und die Aufnahme von Natrium würde die Käserinde zu stark aufquellen und dadurch weich werden, was für die Lagerstabilität des Käses K unvorteilhaft wäre. Daher wird zusätzlich zur NaCl-Konzentration auch die $CaCl_2$-Konzentration im Salzbad 2.1 auf einem kontrolliert hohen Niveau gehalten, um den osmotischen Druck der $Ca^{2+}$-Ionen aus dem Käse K heraus durch Nachdosierung von $CaCl_2$-Lösung in das Salzbad möglichst auszugleichen. Eine Nachdosierung ist deshalb erforderlich, weil die Salzlake SL im Salzbad 2.1 mit der Aufnahme der Molke-Menge kontinuierlich an Volumen zunimmt und das Becken des Salzbades 2.1 quasi überlaufen würde. Dieser "Überlauf", ein Überlaufvolumen oder das überschüssige Volumen $\Delta V$, wird im industriellen Salzungsprozess zunächst in Überlauftanks aufgefangen und dann beim sog. "Absalzen" gezielt abgelassen. Beim heutigen Absalzen A, also dem Ablassen der überschüssigen Salzlake aus dem Salzbadsystem ins Abwasser, wird die darin enthaltene Salz- und Schmutzfracht inklusive NaCl und $CaCl_2$ mit dem Abwasser verloren. Da die gelösten Salze NaCl und $CaCl_2$ in dissoziierter Form vorliegen, trägt somit auch das $CaCl_2$ mit zur Chlorid-Konzentration (Cl⁻-Ionen) im Abwasser bei.

**Beispiel 1:**

Stand der Technik - realisierte Betriebswerte

Mengen- und Salzbilanz am Beispiel eines industriellen großtechnischen Salzungsprozesses von Käse, bei dem der zu salzende Käse K absatzweise oder kontinuierlich in ein vorgegebenes Volumen V der Salzlake SL im Salzbad 2.1 eingebracht wird und entsprechend absatzweise oder kontinuierlich als gesalzener Käse KS das Salzbad 2.1 verlässt.

- X = 92.000 kgK/d Käse K gehen mit einem natürlichen Salzgehalt von xs = 0,9 % Salz S (xs = 0,009 kgS/kgK) in das Salzbad 2.1 ein und führen somit X xs = 828 kgS/d mit sich (d: Tag).
- 25.000 kg Salz S werden in einem Zeitraum von ca. 11 Tagen zwecks Aufsalzung in das Salzbad 2.1 eingeleitet, demnach ca. 2.300 kgS/d entsprechend ca. 830 tS/a (bei ca. 350 d/a), und damit ergeben sich bei ca. 70 €/tS Aufsalzungskosten von ca. **56.000 €/a** (t: Tonne; a: Jahr).
- 4.950 ISL/d Salzlake-Absalzung + 2.700 ISL/d Salzbad-Filter-Entleerung ergeben 7.650 ISL/d Salzlake Verlust (ISL/d = Liter SL/d).
- Abwasser/Verlust bei 19,5 % Salzkonzentration (0,195 kgS/kgSL) bei einer Dichte von 1,11 kgSL/ISL ergeben ca. 8.490 kgSL/d Salzlake SL, die sich in ca. 0,195 x 8.490 = 1.680 kgS/d Salz S und 6.830 kgW/d (Wasser + Bestandteile) aufteilen.

→ Jährliche Salzverluste im Abwasser bei rund 580 tS/a ergeben bei 70 €/tS Absalzungskosten von mehr als **40.000 €/a.**

→ Aus der Emission von 580 tS/a ergibt sich über die Molmassen von Natrium (22,99) und Chlor (35,45) eine Chlorid-Emission von ca. 351 tCl-/a und eine Natrium-Emission von ca. 230 tNa+/a.

- Der Käse K nimmt (2.300 - 1.600) = 640 kgS/d Salz S auf und gibt 6.830 kgW/d (W steht hier für: Wasser + Bestandteile) ab.

   → Nutzbare Salzaufnahme ca. 640 kgS/d Salz S und bei 350 d/a entsprechend 224 tS/a Salz S.

   → Es verlassen (92.000 - 6.830 + 640) = 85.810 kgK/d gesalzener Käse KS das Salzbad 2.1.

   → 85.810 kgK/d gesalzener Käse KS enthalten nach dem Salzbad 2.1 insgesamt (828 + 640) = 1.468 kgS/d Salz S, die einem Salzgehalt $ys$ = 1.468 kgS/d/(85.810 kgK/d) = 0,017 kgS/kgK entsprechen (1,7 %).

- Etwa 1.000 l/a 22%ige $CaCl_2$-Lösung mit einer Dichte $\rho$ = 1,198 kg/l (http://www.periodensystem-online.de) ergeben 264 kg $CaCl_2$/a (entsprechend 0,75 kg $CaCl_2$/d bei 350 d/a). Sie werden kontinuierlich nachdosiert, um 0,4 % $CaCl_2$ (0,004 kgCaCl$_2$/kgW; W = Wasser+Bestandteile) im Salzbad 2.1 zu halten (Analysewert für $Ca^{2+}$ = 0,0015 kgCa$^{2+}$/kgSL, entsprechen mit dem Molverhältnis 40 (Ca)/110,98 ($CaCl_2$) einer Konzentration von 0,4 % $CaCl_2$ in Wasser+Bestandteile).

   → Mit 6.830 kgW/d gehen 6.830 x 0,004 = 27 kg/d $CaCl_2$ (= 10 kgCa$^{2+}$/d + 17 kgCL-/d), bei 350 d/a entsprechend 6 tCl-/a, in das Abwasser.

- Abwasser-Mehrkosten durch Chlorid-Gehalt Cl- > 200 mg/l(Wasser+Bestandteile) (> 0,0002 kgCl-/kg(Wasser+Bestandteile) betragen bei 0,13 €/kgCl-

   → (351 + 6) tCl-/a x 130 €/tCl- = ca. **46.000 €/a.**

   → Die Chlorid-Ionen Cl- im Abwasser aus $CaCl_2$ spielen gegenüber den Chlorid-Ionen Cl- im Abwasser aus NaCl nur eine untergeordnete Rolle.

- Die Gesamtkosten allein durch Salzverlust + Abwasser-Mehrkosten betragen somit mit ca. 40.000 + ca. 46.000 mehr als = **76.000 €/a.**

### Beispiel 2:

Erweiterung der Anlage gemäß Beispiel 1 von 92.000 kg/d = 92 t/d ungesalzenem Käse K um **Faktor 1,7** auf 156 t/d ungesalzenem Käse K (Skalierung der Werte aus Beispiel 1 mit Skalierungsfaktor 1,7).

- 156 tK/d Käse K mit $xs$ = 0,009 kgS/kgK gehen ins Salzbad 2.1 (1.400 kgS/d).
- 3.900 kgS/d = 1.360 tS/a ergeben bei 70 €/tS Aufsalzungskosten von ca. **95.000 €/a.**
- 13.000 ISL/d Salzlake-Verlust SL bei 19,5 % Salzkonzentration bei einer Dichte von 1,11 kgSL/ISL ergeben ca.14.400 kgSL/d Salzlake SL, die sich in ca. 2.810 kgS/d Salz S und ca. 11.590 kgW/d (Wasser + Bestandteile) aufteilen.

   → Jährliche Salzverlust im Abwasser bei rund 990 tS/a ergeben bei 70 €/tS Absalzungskosten von ca. **70.000 €/a.**

   → Aus der Emission von 990 tS/a ergibt sich über die Molmassen von Natrium (22,99) und Chlor (35,45) eine Chlorid-Emission von ca. 600 tCl-/a und eine Natrium-Emission von ca. 390 tNa+/a.

- Der Käse K nimmt (3.900 - 2.810) = 1.090 kgS/d Salz S auf und gibt 11.590 kgW/d (Wasser + Bestandteile) ab.

   → Nutzbare Salzaufnahme ca. 1.090 kS/d Salz S und bei 350 d/a entsprechend 382 tS/Salz S.

   → Es verlassen (156 - 11,59 + 1,09) = 145 tK/d gesalzener Käse KS das Salzbad 2.1.

   → $CaCl_2$-Nachdosierung liefert 10 tCl-/a in das Abwasser.

- Abwasser-Mehrkosten durch Chlorid-Gehalt Cl- > 200 mg/l(Wasser+Bestandteile) (> 0,0002 kgCl-/kg(Wasser+Bestandteile) betragen bei 0,13 €/kgCl-

   → (600 + 10) tCl-/a x 130 €/tCl- > **79.000 €/a.**

- Die Gesamtkosten allein durch Salzverlust + Abwasser-Mehrkosten betragen somit mit ca. 70.000 + ca. 79.000 mehr als = **149.000 €/a.**

**Beispiel 3:**

**Beispiel 3** geht aus von dem im **Beispiel 2** dargestellten und abgeschätzten Salzungsprozess (Skalierungsfaktor 1,7 gegenüber Salzungsprozess gemäß **Beispiel 1)** und zeigt mit der Zielsetzung

- hygienische Reinigung des Salzbades 2.1
- effizientes Salz-Recycling
- Einhaltung von max. 200 mgCl-/l(Wasser+Bestandteile) entsprechend 0,0002 kgCl-/kg(Wasser+Bestandteile) entsprechend 320 mgNaCl/kg(Wasser+Bestandteile) entsprechend 0,00032 kgNaCl/kg(Wasser+Bestandteile in ein Oberflächenwasser

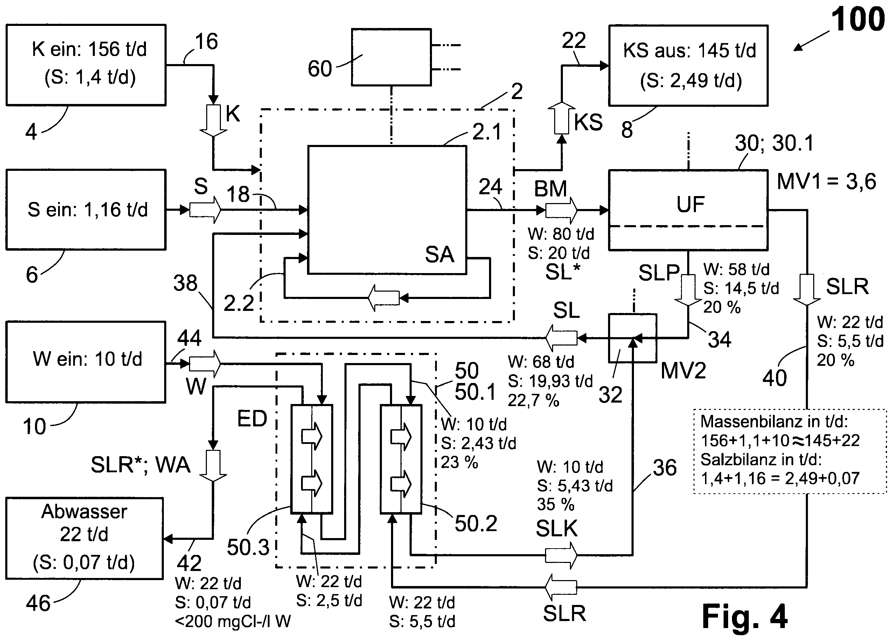

die Ergebnisse auf, die mit dem erfindungsgemäßen Verfahren und der Anlage zu seiner Durchführung gemäß **Figur 2** gegenüber dem bekannten Verfahren gemäß Beispiel 2, dargestellt in den **Figuren 1** und **3,** erzielbar und in **Figur 4** dargestellt sind. Auf eine detaillierte rechnerische Abschätzung wird verzichtet. Die relevanten Ergebnisse der **Beispiele 2** und **3** sind in der nachstehenden **Tabelle** vergleichsweise dargestellt:

**Tabelle**

| Merkmal | | Beispiel 2 | Beispiel 3 |
|---|---|---|---|
| ungesalzener Käse K | tK/d | 156 | 156 |
| Gesalzener Käse KS | tK/d | 145 | 145 |
| Aufsalzung - Salz S | tS/d | 3,90 | 1,16 |
| Salzverlust NaCl (im Abwasser) | tNaCl/d | 2,81 | 0,07 |
| Chlorid Cl- (im Abwasser) | tCl-/d | 1,70 | 0,04 |
| Grenzwert Chlorid Cl- | mg/l W | >> 200 | < 200 |

BEZUGSZEICHENLISTE DER VERWENDETEN ABKÜRZUNGEN

**Figuren 1, 3** (Stand der Technik)

1    bekannte erste Anlage

2    Salzbad-Einheit
2.1   Salzbad
2.2   Umlaufleitung

4    Käse-Bereitstellungseinheit
6    Salz-Bereitstellungseinheit
8    Käse-Aufnahmeeinheit
10   Wasser-Bereitstellungseinheit
12   Überlauftank
14   Gully
16   Käse-Zuführeinrichtung
18   Salz-Zuführeinrichtung
20   Wasser-Zuführleitung
22   Käse-Abführeinrichtung
24   Salzlake-Abführleitung
26   Salzlake-Ablassleitung

A    Absalzen
B    Bestandteile

K      ungesalzener Käse
KA    Käse aufnehmen
KB    Käse bereitstellen
KS    gesalzener Käse

M    Molke

S     Salz
SA    Salzen
SB    Salz bereitstellen
SL    Salzlake (originär zubereitet oder gereinigt)
SL*   verunreinigte Salzlake

ST    Stapeln
UW   Umwälzen

V     vorgegebenes Volumen
$\Delta V$    überschüssiges Volumen

W    Wasser
WB   Wasser bereitstellen

c     erforderliche Salzbad-Konzentration
$\tau$    Verweilzeit

**Figur 1a** (Stand der Technik)

1*    bekannte zweite Anlage
27    Filter
28    Erhitzer

29     Abzweigleitung
29.1   erstes Absperrventil
29.2   zweites Absperrventil

F     Filtern
H     Heizen (Aufkochen)
SL+   gefilterte und aufgekochte Salzlake
WM   Wärmeträgermedium

**Figuren 2, 4**

100   Anlage

30     erste Salzlake-Trenneinheit
30.1   Ultrafiltrationseinheit

32    Salzlake-Aufkonzentrierungseinheit
34    Permeat-Ablaufleitung
36    erste Salzlake-Zuführleitung
38    zweite Salzlake-Zuführleitung
40    Retentat-Ablaufleitung
42    Abwasser-Ablaufleitung
44    Wasser-Zuführleitung

46      Abwasser-Aufnahmeeinrichtung

50      zweite Salzlake-Trenneinheit
50.1    Elektrodialyseeinheit
50.2    erster Ionentauschermembranen-Stapel
50.3    zweiter Ionentauschermembranen-Stapel

60      Steuereinrichtung

AK      Aufkonzentrieren
BM      Bemessen

$Ca^{2+}$      Calcium-Ionen
$CaCl_2$    Calcium-Chlorid
CL-     Chlor-Ionen (Chlorid)

E       Einleiten
ED      Elektrodialyse-Verfahren
ES      Einstellen
MT1     erstes Membran-Trennverfahren
MT2     zweites Membran-Trennverfahren

MV1     erstes Mengenverhältnis
MV2     zweites Mengenverhältnis

Na+     Natrium-Ionen
NaCl    Natriumchlorid

SE      Entsalzen

SLK     gereinigte Salzlake
SLP     gereinigtes Salzlake-Permeat
SLR     verunreinigtes Salzlake-Retentat
SLR*    entsalztes verunreinigtes Salzlake-Retentat

TR      Trennen
UF      Ultrafiltrations-Verfahren

WAA     Abwasser aufnehmen
WA      Abwasser (z.B. Diluat)

Z       Zusammenführen (gesteuert)

a       erster Steuerungsanschluss

b1      zweiter Steuerungsanschluss
b2      dritter Steuerungsanschluss

c1      Salz-Konzentration (Mischung aus SLP + SLK)

x1      erste Anteile
x2      zweite Anteile

## Patentansprüche

1.  Verfahren zur Behandlung von Salzlake in Salzbädern für ein Salzen von Käse, bei dem

    • ein zu salzender Käse (K) absatzweise oder kontinuierlich in ein vorgegebenes Volumen (V) der Salzlake (SL)

im Salzbad (2.1) eingebracht, dort in einer bestimmten Verweilzeit ($\tau$) das Salzen (SA) erfährt und entsprechend absatzweise oder kontinuierlich als gesalzener Käse (KS) das Salzbad (2.1) verlässt,

• die Salzlake (SL) während der Verweilzeit ($\tau$) einem Umwälzen (UW) unterzogen wird,

• beim Salzen (SA) Molke (M) und andere Bestandteile (B) aus dem Käse (K, KS) in das vorgegebene Volumen (V) übertreten,

• zum Konstanthalten des vorgegebenen Volumens (V) ein überschüssiges Volumen ($\Delta V$) einer durch die Molke (M) und die Bestandteile (B) verunreinigten Salzlake (SL*) aus dem Salzbad (2.1) abgeführt wird,

• Konzentrations- und Mengenverluste der Salzlake (SL) im Salzbad (2.1) an Salz (S) und Wasser (W) ausgeglichen werden,

• Trennen (TR) der abgeführten verunreinigten Salzlake (SL*) durch ein erstes Membran-Trennverfahren (MT1) in ein von der Molke (M) und den Bestandteilen (B) gereinigtes Salzlake-Permeat (SLP) und ein mit der Molke (M) und den Bestandteilen (B) verunreinigtes Salzlake-Retentat (SLR),

• Entsalzen (SE) des verunreinigten Salzlake-Retentats (SLR) durch ein zweites Membran-Trennverfahren (MT2), das so eingerichtet ist, dass wenigstens ein Teil des gelösten Salzes (S) in einen Strom aufnehmendes Wasser (W) überführt und darin gelöst wird, das Wasser (W) und das darin gelöste Salz (S) eine gereinigte Salzlake (SLK) bilden und ein entsprechend entsalztes verunreinigtes Salzlake-Retentat (SLR*) als Abwasser (WA) verworfen wird und

• Einleiten (E) des gereinigten Salzlake-Permeats (SLP) und der gereinigten Salzlake (SLK) in die Salzlake (SL) im Salzbad (2.1),

**gekennzeichnet durch** folgende Schritte (i) bis (iv):

(i) im gereinigten Salzlake-Permeat (SLP) werden erste Anteile (x1) und im verunreinigten Salzlake-Retentat (SLR) werden zweite Anteile (x2) von gelöstem Salz (S) mitgeführt;

(ii) Einstellen (ES) eines ersten Mengenverhältnisses (MV1) zwischen Salzlake-Permeat (SLP) und Salzlake-Retentat (SLR) dergestalt, dass die Menge an Salzlake-Retentat (SLR) mindestens der Menge an Molke (M) und Bestandteilen (B) entspricht, die in der Verweilzeit ($\tau$) in die Salzlake (SL) im Salzbad (2.1) übertritt;

(iii) Bemessen (BM) eines Stroms der abgeführten verunreinigter Salzlake (SL*) in Verbindung mit dem eingestellten ersten Mengenverhältnis (MV1) dergestalt, dass ein Chlorid-Gehalt (Cl-) im entsalzten verunreinigten Salzlake-Retentat (SLR*) einen gesetzlichen Grenzwert für die Einleitung des entsalzten verunreinigten Salzlake-Retentats (SLR*) in Oberflächenwasser nicht überschreitet, und

(iv) ein gesteuertes Zusammenführen (Z) des gereinigten Salzlake-Permeats (SLP) und der gereinigten Salzlake (SLK) in einem zweiten Mengenverhältnis (MV2), durch das ein Aufkonzentrieren (AK) der Mischung aus beiden Komponenten auf eine Salz-Konzentration (c1) erfolgt, die wenigstens einer erforderlichen Salzbad-Konzentration (c) entspricht.

2. Verfahren nach Anspruch 1,
   **dadurch gekennzeichnet,**
   **dass** das erste Membran-Trennverfahren (MT1) als Ultrafiltrations-Verfahren (UF) ausgebildet ist.

3. Verfahren nach Anspruch 1,
   **dadurch gekennzeichnet,**
   **dass** das zweite Membran-Trennverfahren (MT2) als Elektrodialyse-Verfahren (ED) ausgebildet ist.

4. Verfahren nach Anspruch 2,
   **dadurch gekennzeichnet,**
   **dass** das zweite Membran-Trennverfahren (MT2) als Elektrodialyse-Verfahren (ED) ausgebildet ist.

5. Verfahren nach einem der vorhergehenden Ansprüche,
   **dadurch gekennzeichnet,**
   **dass** das Salz (S) Natriumchlorid (NaCl) und/oder Calciumchlorid ($CaCl_2$) ist.

6. Verfahren nach einem der vorhergehenden Ansprüche,
   **dadurch gekennzeichnet,**
   **dass** die Bestandteile (B) Eiweiß, Milchzucker, Milchsäure, sonstige Rückstände und Staub sind.

7. Anlage (100) zur Behandlung von Salzlake in Salzbädern für ein Salzen von Käse, bestehend aus einer

• Salzbad-Einheit (2), die in dem Salzbad (2.1) die Salzlake (SL) aufnimmt,

• Käse-Bereitstellungseinheit (4), aus der ein zu salzender Käse (K) dem bestimmten Volumen (V) der Salzlake (SL) im Salzbad (2.1) absatzweise oder kontinuierlich zugeführt wird,

• Salz-Bereitstellungseinheit (6), aus der Salz (S) der Salzlake (SL) im Salzbad (2.1) zugeführt wird,

• Wasser-Bereitstellungseinheit (10), die Wasser (W) für die Salzlake (SL) im Salzbad (2.1) bereitstellt,

• Käse-Aufnahmeeinheit (8), die einen in der Salzlake (SL) im Salzbad (2.1) in einer Verweilzeit ($\tau$) gesalzenen Käse (KS) entsprechend absatzweise oder kontinuierlich aufnimmt,

**dadurch gekennzeichnet,**

• **dass** eine erste Salzlake-Trenneinheit (30) über eine Salzlake-Abführleitung (24) mit dem Salzbad (2.1) fluidgängig verbunden und die erste Salzlake-Trenneinheit (30) dazu eingerichtet ist, mittels eines ersten Membran-Trennverfahrens (MT1) eine aus dem Salzbad (2.1) abgeführte, durch Molke (M) und andere Bestandteile (B) aus dem Käse (K, KS) verunreinigte Salzlake (SL*) in ein von der Molke (M) und den Bestandteilen (B) gereinigtes Salzlake-Permeat (SLP) und ein mit der Molke (M) und den Bestandteilen (B) verunreinigtes Salzlake-Retentat (SLR) zu trennen, wobei im gereinigten Salzlake-Permeat (SLP) erste Anteile (x1) und im verunreinigten Salzlake-Retentat (SLR) zweite Anteile (x2) von gelöstem Salz (S) mitgeführt werden;

• **dass** eine Steuereinrichtung (60) vorgesehen ist, die über einen ersten Steuerungsanschluss (a) mit einer Zustandsinformation des Salzbades (2.1) und über einen zweiten Steuerungsanschluss (b1) mit der ersten Salzlake-Trenneinheit (30) in steuerungstechnischer Verbindung steht und dazu eingerichtet ist, einen Strom der abgeführten verunreinigten Salzlake (SL*) zu bemessen und ein erstes Mengenverhältnis (MV1) zwischen dem Salzlake-Permeat (SLP) und dem Salzlake-Retentat (SLR) dergestalt einzustellen, dass die Menge an Salzlake-Retentat (SLR) mindestens der Menge an Molke (M) und Bestandteilen (B) entspricht, die in der Verweilzeit ($\tau$) in die Salzlake (SL) im Salzbad (2.1) übertritt;

• **dass** eine zweite Salzlake-Trenneinheit (50) vorgesehen und dazu eingerichtet ist, mittels eines zweiten Membran-Trennverfahrens (MT2) das verunreinigte Salzlake-Retentat (SLR) durch Entsalzen (SE) in ein Abwasser (WA) zu überführen, dessen Chlorid-Gehalt (Cl-) den gesetzlichen Grenzwert für die Einleitung in Oberflächenwasser nicht überschreitet, wobei die zweiten Anteile (x2) von im verunreinigten Salzlake-Retentat (SLR) gelöstem Salz (S) in einen Strom des Wassers (W) überführt und darin gelöst werden und das Wasser (W) und das darin gelöste Salz (S) eine gereinigte Salzlake (SLK) bilden;

• **dass** die zweite Salzlake-Trenneinheit (50) einerseits mit einer Konzentrat-Ablaufleitung (40) für das verunreinigte Salzlake-Retentat (SLR), die zu der ersten Salzlake-Trenneinheit (30) führt, und mit einer ersten Salzlake-Zuführleitung (36) für die gereinigte Salzlake (SLK) und andererseits mit einer Abwasser-Leitung (42) für das Abwasser (WA) mit einer Abwasser-Aufnahmeeinrichtung (46) und über eine Wasser-Zuführleitung (44) für das Wasser (W) mit der Wasser-Bereitstellungseinheit (10) jeweils fluidgängig verbunden ist und

• **dass** eine Permeat-Ablaufleitung (34) für das gereinigte Salzlake-Permeat (SLP) und die Salzlake-Zuführleitung (36) jeweils fluidgängig mit dem Salzbad (2.1) verbunden sind.

8. Anlage nach Anspruch 7,
**dadurch gekennzeichnet,**
**dass** die erste Salzlake-Trenneinheit (30) als Ultrafiltrationseinheit (30.1) ausgebildet ist.

9. Anlage nach Anspruch 7,
**dadurch gekennzeichnet,**
**dass** die zweite Salzlake-Trenneinheit (50) als Elektrodialyseeinheit (50.1) ausgebildet ist.

10. Anlage nach Anspruch 8,
**dadurch gekennzeichnet,**
**dass** die zweite Salzlake-Trenneinheit (50) als Elektrodialyseeinheit (50.1) ausgebildet ist.

11. Anlage nach Anspruch 9 oder 10,
**dadurch gekennzeichnet,**
**dass** die Elektrodialyseeinheit (50.1) wenigstens einen ersten Ionentauschermembranen-Stapel (50.2; 50.3; ...) aufweist.

12. Anlage nach einem der Ansprüche 7 bis 11,
**dadurch gekennzeichnet,**
**dass** die Permeat-Ablaufleitung (34) und die erste Salzlake-Zuführleitung (36) in einer Salzlake-Aufkonzentrierungseinheit (32) fluidgängig zusammengeführt und von dort über eine zweite Salzlake-Zuführleitung (38) fluidgängig mit dem Salzbad (2.1) verbunden sind.

**13.** Anlage nach Anspruch 12,
**dadurch gekennzeichnet,**
**dass** die Steuereinrichtung (60) über einen dritten Steuerungsanschluss (b2) in steuerungstechnischer Verbindung mit der Salzlake-Aufkonzentrierungseinheit (32) steht und dazu eingerichtet ist, ein gesteuertes Zusammenführen (Z) des gereinigten Salzlake-Permeats (SLP) und der gereinigten Salzlake (SLK) in einem zweiten Mengenverhältnis zu erreichen, durch das ein Aufkonzentrieren (AK) der Mischung aus beiden Komponenten auf eine Salz-Konzentration (c1) erfolgt, die wenigstens einer erforderlichen Salzbad-Konzentration (c) entspricht.

**Claims**

**1.** Method for the treatment of brine in salt baths for salting cheese, in which

• a cheese (K) to be salted is introduced in batches or continuously into a predetermined volume (V) of the brine (SL) in the salt bath (2.1), undergoes salting (SA) there in a predetermined dwell time ($\tau$) and leaves the salt bath (2.1) correspondingly in batches or continuously as salted cheese (KS),
• the brine (SL) undergoes recirculation (UW) during the dwell time ($\tau$),
• during salting (SA) whey (M) and other components (B) pass from the cheese (K, KS) into the predetermined volume (V),
• to keep the predetermined volume (V) constant, an excess volume ($\Delta V$) of brine (SL*) contaminated by the whey (M) and the components (B) is discharged from the salt bath (2.1),
• concentration and volume losses of the brine (SL) in the salt bath (2.1) in salt (S) and water (W) are compensated,
• separating (TR) the discharged contaminated brine (SL*) by a first membrane separation process (MT1) into a brine permeate (SLP) purified from the whey (M) and the components (B) and a brine retentate (SLR) contaminated with the whey (M) and the components (B),
• desalination (SE) of the contaminated brine retentate (SLR) by a second membrane separation process (MT2), which is designed so that at least part of the dissolved salt (S) is transferred to a current-absorbing water (W) and dissolved therein, the water (W) and the salt (S) dissolved therein form a purified brine (SLK) and a correspondingly desalted contaminated brine retentate (SLR*) is discarded as waste water (WA), and
• introducing (E) the purified brine permeate (SLP) and the purified brine (SLK) into the brine (SL) in the salt bath (2.1),

**characterized by the following steps (i) to (iv):**

(i) first portions (x1) of dissolved salt (S) are transported in the purified brine permeate (SLP) and second portions (x2) of dissolved salt (S) are transported in the contaminated brine retentate (SLR);
(ii) adjusting (ES) a first quantity ratio (MV1) between brine permeate (SLP) and brine retentate (SLR) in such a way that the quantity of brine retentate (SLR) that passes into the brine (SL) in the salt bath (2.1) during the dwell time ($\tau$) corresponds at least to the quantity of whey (M) and the components (B);
(iii) metering (BM) a flow of the discharged contaminated brine (SL*) in conjunction with the adjusted first quantity ratio (MV1) so that a chloride content (CI-) in the desalted contaminated brine retentate (SLR*) does not exceed a legal limit for the discharge of the desalted contaminated brine retentate (SLR*) into surface water, and
(iv) a controlled merging (Z) of the purified brine permeate (SLP) and the purified brine (SLK) in a second quantity ratio (MV2), by means of which concentrating (AK) of the mixture of the two components to a salt bath concentration (c1) which corresponds to at least one required salt bath concentration (c) takes place.

**2.** Process according to claim 1, **characterized in that** the first membrane separation process (MT1) is designed as an ultrafiltration process (UF).

**3.** Process according to claim 1, **characterized in that** the second membrane separation process (MT2) is designed as an electrodialysis process (ED).

**4.** Method according to claim 2, **characterized in that** the second membrane separation process (MT2) is designed as an electrodialysis process (ED).

**5.** Method according to one of the preceding claims, **characterized in that** the salt (S) is sodium chloride (NaCl) and/or calcium chloride (CaCl2).

6. Process according to one of the preceding claims, **characterized in that** the components (B) are protein, lactose, lactic acid, other residues and dust.

7. Plant (100) for the treatment of brine in salt baths for a salting of cheese, comprising a

   • salt bath unit (2) which receives the brine (SL) in the salt bath (2.1),
   • cheese preparation unit (4) from which a cheese (K) to be salted is supplied in batches or continuously to the determined volume (V) of brine (SL) in the salt bath (2.1),
   • salt preparation unit (6) from which salt (S) is supplied to the brine (SL) in the salt bath (2.1),
   • water supply unit (10) which provides water (W) for the brine (SL) in the salt bath (2.1),
   • cheese receiving unit (8) which receives a cheese (KS) salted in the brine (SL) in the salt bath (2.1) in a dwell time ($\tau$) correspondingly in batches or continuously,
   **characterized in**
   • **that** a first brine separation unit (30) is connected to the salt bath (2.1) in a fluid-running manner via a brine discharge line (24), and the first brine separation unit (30) is set up to separate, by means of a first membrane separation process (MT1), a brine (SL), which is discharged from the salt bath (2.1) and contaminated by whey (M) and other components (B) from the cheese (K, KS), into a brine permeate (SLP) purified from the whey (M) and the components (B) and a brine retentate (SLR) contaminated with the whey (M) and the components (B), wherein first portions (x1) of dissolved salt (S) are transported in the purified brine permeate (SLP) and second portions (x2) of dissolved salt (S) are transported in the contaminated brine retentate (SLR);
   • **that** a control unit (60) is provided, which is connected in a control-technical manner via a first control port (a) to a status information of the salt bath (2.1) and via a second control port (b1) to the first brine separation unit (30) and is set up to measure a flow of the discharged contaminated brine (SL*) and to set a first quantity ratio (MV1) between the brine permeate (SLP) and the brine retentate (SLR) in such a way that the quantity of brine retentate (SLR) which passes into the brine (SL) in the salt bath (2.1) is at least equal to the amount of whey (M) and the components (B);
   • **that** a second brine separation unit (50) is provided and is set up to convert, by means of a second membrane separation process (MT2), the contaminated brine retentate (SLR) through desalination (SE) into a waste water (WA) whose chloride content (Cl-) does not exceed the legal limit for discharge into surface water, wherein the second portions (x2) of salt (S) dissolved in the contaminated brine retentate (SLR) are transferred to a flow of the water (W) and are dissolved therein and the water (W) and the salt (S) dissolved therein form a purified brine (SLK);
   • **that** the second brine separation unit (50) is connected, in each case in a fluid-running manner, on the one hand, to a concentrate drain line (40) for the contaminated brine retentate (SLR), which drain line (40) leads to the first brine separation unit (30), and with a first brine feed line (36) for the purified brine (SLK) and, on the other hand, via a waste water intake device (46), to a waste water line (42) for the waste water (WA) and, via a water supply line (44) for the water (W), to the water supply unit (10), and
   • **that** a permeate discharge line (34) for the purified brine permeate (SLP) and the brine feed line (36) are each connected in a fluid-running manner to the salt bath (2.1).

8. Plant according to claim 7, **characterized in that** the first brine separation unit (30) is designed as an ultrafiltration unit (30.1).

9. Plant according to claim 7, **characterized in that** the second brine separation unit (50) is designed as an electrodialysis unit (50.1).

10. Plant according to claim 8, **characterized in that** the second brine separation unit (50) is designed as an electrodialysis unit (50.1).

11. Plant according to claim 9 or 10, **characterized in that** the electrodialysis unit (50.1) comprises at least one first ion exchange membrane stack (50.2; 50.3; ...).

12. Plant according to one of the claims 7 to 11, **characterized in that** the permeate discharge line (34) and the first brine feed line (36) are brought together in a fluid-running manner in a brine concentration unit (32) and, from there, are connected in a fluid-running manner to the salt bath (2.1) via a second brine feed line (38).

13. Plant according to claim 12, **characterized in that** the control unit (60) is, via a third control port (b2), in a control-technical connection with the brine concentration unit (32) and is set up to achieve a controlled merging (Z) of the purified brine permeate (SLP) and the purified brine (SLK) in a second quantity ratio, by means of which concentrating (AK) the mixture of the two components to a salt concentration (c1) which corresponds to at least one required salt bath concentration (c) takes place.

**Revendications**

1.  Procédé pour le traitement de saumure dans des bains de sel pour le salage de fromage, dans lequel

    • un fromage (K) à saler est introduit par intermittence ou continuellement dans un volume prédéfini (V) de la saumure (SL) dans le bain de sel (2.1), y subit le salage (SA) pendant un temps de séjour déterminé ($\tau$) et quitte le bain de sel (2.1) de façon correspondante par intermittence ou continuellement en tant que fromage salé (KS),
    • la saumure (SL) est soumise à un brassage (UW) pendant le temps de séjour ($\tau$),
    • lors du salage (SA), du lactosérum (M) et d'autre composants (B) sont transférés dans le volume prédéfini (V) à partir du fromage (K, KS),
    • pour le maintien du volume prédéfini (V) à un niveau constant, un volume excédentaire ($\Delta$V) d'une saumure contaminée (SL*) par le lactosérum (M) et les composants (B) est évacué du bain de sel (2.1),
    • des pertes de concentration et de quantité de la saumure (SL) dans le bain de sel (2.1) sont compensées en sel (S) et en eau (W),
    • séparation (TR) de la saumure contaminée (SL*) évacuée, à l'aide d'un premier procédé de séparation par membrane (MT1), en un perméat de saumure (SLP) débarrassé du lactosérum (M) et des composants (B) et un rétentat de saumure (SLR) contaminé par le lactosérum (M) et les composants (B),
    • dessalage (SE) du rétentat de saumure contaminé (SLR) à l'aide d'un deuxième procédé de séparation par membrane (MT2), lequel est configuré de telle façon qu'au moins une partie du sel (S) dissous est transférée dans de l'eau (W) recevant un flux et dissoute dans celle-ci, l'eau (W) et le sel (S) dissous dans celle-ci forment une saumure purifiée (SLK) et un rétentat de saumure contaminé dessalé (SLR*) correspondant est éliminé en tant qu'eau usée (WA) et
    • introduction (E) du perméat de saumure purifié (SLP) et de la saumure purifiée (SLK) dans la saumure (SL) dans le bain de sel (2.1),

    **caractérisé par** les étapes (i) à (iv) suivantes :

    (i) des premières parts (x1) de sel (S) dissous sont entraînées dans le perméat de saumure purifié (SLP) et des deuxièmes parts (x2) de sel (S) dissous sont entraînées dans le rétentat de saumure contaminé (SLR) ;
    (ii) réglage (ES) d'une première proportion (MV1) entre le perméat de saumure (SLP) et le rétentat de saumure (SLR) de manière à ce que la quantité de rétentat de saumure (SLR) corresponde au moins à la quantité de lactosérum (M) et de composants (B) transférés dans la saumure (SL) dans le bain de sel (2.1) pendant le temps de séjour ($\tau$) ;
    (iii) mesure (BM) d'un flux de la saumure contaminée (SL*) évacuée en rapport avec la première proportion réglée (MV1) de manière à ce qu'une teneur en chlorure (CI-) dans le rétentat de saumure contaminé dessalé (SLR*) ne dépasse pas une limite légale pour l'introduction du rétentat de saumure contaminé dessalé (SLR*) dans l'eau de surface, et
    (iv) un assemblage commandé (Z) du perméat de saumure purifié (SLP) et de la saumure purifiée (SLK) dans une deuxième proportion (MV2), résultant dans une concentration (AK) du mélange des deux composants à une concentration de sel (c1) correspondant au moins à une concentration de bain de sel requise (c).

2.  Procédé selon la revendication 1,
    **caractérisé en ce que**
    le premier procédé de séparation par membrane (MT1) est conçu comme un procédé d'ultrafiltration (UF).

3.  Procédé selon la revendication 1,
    **caractérisé en ce que**
    le deuxième procédé de séparation par membrane (MT2) est conçu comme un procédé d'électrodialyse (ED).

4.  Procédé selon la revendication 2,
    **caractérisé en ce que**
    le deuxième procédé de séparation par membrane (MT2) est conçu comme un procédé d'électrodialyse (ED).

5. Procédé selon l'une des revendications précédentes,
**caractérisé en ce que**
le sel (S) est du chlorure de natrium (NaCl) et/ou du chlorure de calcium (CaCl$_2$).

6. Procédé selon l'une des revendications précédentes,
**caractérisé en ce que**
les composants (B) sont des protéines, du lactose, de l'acide lactique, d'autres résidus et de la poussière.

7. Installation (100) pour le traitement de saumure dans des bain de sel pour un salage de fromage, comprenant

• une unité de bain de sel (2), laquelle reçoit la saumure (SL) dans le bain de sel (2.1),
• une unité de fourniture de fromage (4), à partir de laquelle un fromage (K) à saler est acheminé par intermittence ou continuellement vers le volume déterminé (V) de la saumure (SL) dans le bain de sel (2.1),
• une unité de fourniture de sel (6), à partir de laquelle du sel (S) est fourni à la saumure (SL) dans le bain de sel (2.1),
• une unité de fourniture d'eau (10), laquelle fournit de l'eau (W) pour la saumure (SL) dans le bain de sel (2.1),
• une unité de réception de fromage (8), laquelle reçoit un fromage (KS) salé pendant un temps de séjour ($\tau$) dans la saumure (SL) dans le bain de sel (2.1), de façon correspondante par intermittence ou continuellement,
**caractérisée en ce que**
• une première unité de séparation de saumure (30) est reliée fluidiquement au bain de sel (2.1) par le biais d'une conduite d'évacuation de saumure (24) et la première unité de séparation de saumure (30) est configurée pour séparer une saumure contaminée (SL*) par du lactosérum (M) et d'autres composants (B) issus du fromage (K, KS), évacuée du bain de sel (2.1), au moyen d'un premier procédé de séparation par membrane (MT1), en un perméat de saumure (SLP) débarrassé du lactosérum (M) et des composants (B) et un rétentat de saumure (SLR) contaminé par le lactosérum (M) et les composants (B), dans lequel des premières parts (x1) de sel (S) dissous sont entraînées dans le perméat de saumure purifié (SLP) et des deuxièmes parts (x2) de sel (S) dissous sont entraînées dans le rétentat de saumure contaminé (SLR) ;
• il est prévu un dispositif de commande (60), lequel est relié par une technique de commande à une information d'état du bain de sel (2.1) par le biais d'un premier raccord de commande (a) et à la première unité de séparation de saumure (30) par le biais d'un deuxième raccord de commande (b1) et configuré pour mesurer un flux de la saumure contaminée (SL*) évacuée et pour régler une première proportion (MV1) entre le perméat de saumure (SLP) et le rétentat de saumure (SLR) de manière à ce que la quantité de rétentat de saumure (SLR) corresponde au moins à la quantité de lactosérum (M) et de composants (B) transférés dans la saumure (SL) dans le bain de sel (2.1) pendant le temps de séjour ($\tau$) ;
• il est prévu une deuxième unité de séparation de saumure (50) configurée pour transférer le rétentat de saumure contaminé (SLR) par dessalage (SE) au moyen d'un deuxième procédé de séparation par membrane (MT2) vers une eau usée (WA), dont la teneur en chlorure (CI-) ne dépasse pas la limite légale pour l'introduction dans l'eau de surface, dans lequel les deuxièmes parts (x2) de sel (S) dissous dans le rétentat de saumure contaminé (SLR) sont transférées vers un flux de l'eau (W) et dissoutes dans celle-ci et l'eau (W) et le sel (S) dissous dans celle-ci forment une saumure purifiée (SLK) ;
• la deuxième unité de séparation de saumure (50) est reliée fluidiquement d'une part respectivement à une conduite de décharge de concentré (40) pour le rétentat de saumure contaminé (SLR), laquelle mène à la première unité de séparation de saumure (30), et à une première conduite d'alimentation en saumure (36) pour la saumure purifiée (SLK) et d'autre part respectivement à un dispositif de réception d'eau usée (46) par une conduite d'eau usée (42) pour l'eau usée (WA) et à l'unité de fourniture d'eau (10) par le biais d'une conduite d'alimentation en eau (44) pour l'eau (W) et
• une conduite de décharge de perméat (34) pour le perméat de saumure purifié (SLP) et la conduite d'alimentation en saumure (36) sont reliées respectivement fluidiquement au bain de sel (2.1).

8. Installation selon la revendication 7,
**caractérisée en ce que**
la première unité de séparation de saumure (30) est conçue comme une unité d'ultrafiltration (30.1).

9. Installation selon la revendication 7,
**caractérisée en ce que**
la deuxième unité de séparation de saumure (50) est conçue comme une unité d'électrodialyse (50.1).

10. Installation selon la revendication 8,

**caractérisée en ce que**
la deuxième unité de séparation de saumure (50) est conçue comme une unité d'électrodialyse (50.1).

11. Installation selon la revendication 9 ou 10,
**caractérisée en ce que**
l'unité d'électrodialyse (50.1) présente au moins une première pile de membranes d'échange d'ions (50.2 ; 50.3 ; ...).

12. Installation selon l'une des revendications 7 à 11,
**caractérisée en ce que**
la conduite de décharge de perméat (34) et la première conduite d'alimentation en saumure (36) sont réunies fluidiquement dans une unité de concentration de saumure (32) et reliées fluidiquement au bain de sel (2.1) à partir de là par le biais d'une deuxième conduite d'alimentation en saumure (38).

13. Installation selon la revendication 12,
**caractérisée en ce que**
le dispositif de commande (60) est relié par une technique de commande à l'unité de concentration de saumure (32) par un troisième raccord de commande (b2) et configuré pour réaliser un assemblage commandé (Z) du perméat de saumure purifié (SLP) et de la saumure purifiée (SLK) dans une deuxième proportion, permettant d'obtenir une concentration (AK) du mélange des deux composants à une concentration de sel (c1) correspondant au moins à une concentration de saumure requise (c).

Fig. 1 (Stand der Technik)

**Fig. 1a**

(Stand der Technik)

EP 4 203 692 B1

Fig. 2

100

EP 4 203 692 B1

**Fig. 3** (Stand der Technik)

Massenbilanz in t/d:
$156+1,09 \approx 145+11,49$
Salzbilanz in t/d:
$1,4+3,90 = 2,49+2,81$

K ein: 156 t/d
(S: 1,4 t/d)

16

K

S ein: 3,90 t/d

S   18

20

W

2.1

SL → SL*
c K M B
V ΔV τ
SA

2.2        UW
SL; SL*

KS

22

KS aus: 145 t/d
(S: 2,49 t/d)

8

24

SL*

12    SL*

26

Abwasser
11,59 tW/d
S: 2,81 t/d
>>200 mgCl-/l W

14

SL*

1

4

6

10

2

EP 4 203 692 B1

Fig. 4

EP 4 203 692 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4324668 A1
- DE 4427478 A1
- US 4205090 A
- US 2009142459 A1
- EP 2745704 A1

**In der Beschreibung aufgeführte Nicht-Patentliteratur**

- Grundzüge der Milchwirtschaft und des Molkerei-wesens. G. Roeder. Verlag Paul Parey, 1954
- **H. G. KESSLER**. Lebensmittel- und Bioverfahrens-technik, Molkereitechnologie. Verlag A. Kessler, 1996
- **KAMMERLEHNER, J.** Käsesalzungsverfahren - Minimierung der Natriumchloridverluste. Deutsche Milchwirtschaft, 1993, vol. 5, 326-338, 330-332, 333